(19) Europäisches Patentamt
European Patent Office
Office européen des brevets

(11) EP 4 339 971 A1

(12) EUROPEAN PATENT APPLICATION

(43) Date of publication:
20.03.2024 Bulletin 2024/12

(21) Application number: 22195868.9

(22) Date of filing: 15.09.2022

(51) International Patent Classification (IPC):
***H01B 3/30*** *(2006.01)* ***C08L 79/08*** *(2006.01)*
***H01K 3/30*** *(2006.01)*

(52) Cooperative Patent Classification (CPC):
**H01B 3/306; C08G 73/14; C08L 79/08; C09D 179/08; H01B 3/305;** C08G 73/1039; C08G 73/105; C08G 73/1064; C08G 73/1067; C08G 73/1071

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Solvay Specialty Polymers USA, LLC**
**Alpharetta, Georgia 30005-3914 (US)**

(72) Inventors:
- **NIELSEN, Matthew**
  **Alpharetta, 30005 (US)**
- **PELLISSIER, Jarrod**
  **Alpharetta, 30005 (US)**
- **BENSON, Bryan**
  **Alpharetta, 30005 (US)**

(74) Representative: **Benvenuti, Federica**
**SyensQo S.A.**
**Intellectual Assets Management**
**98, rue de la Fusée**
**1130 Bruxelles (BE)**

(54) **INSULATED CONDUCTOR**

(57) The invention relates to an insulated conductor comprising an insulating layer comprising or made from a composition including certain particular polyamide imide polymers, possessing outstanding dielectric behaviour, so as to maximize PDIV, while keeping processability, good adhesion, including at high temperature.

EP 4 339 971 A1

## Description

### Technical field

The invention relates to insulated conductors, in particular magnet wires, comprising an insulation made from certain polyamideimides, having improved dielectric properties, and to the use thereof in electric motors, in particular electric-vehicle motors.

### Background art

The electrification of vehicles is progressing at high pace, pushed by technology developments notably in driving motors. Magnet wires are more and more used in electric vehicles since they are present in e.g. inverter drive motors, motor starter generators, transformers, etc. In line with the advancement of motors, magnet wires must meet more and more stringent requirements, in particular in terms of permittivity and heat resistance. Typically, a magnet wire is constructed by applying electrical insulation to a metallic conductor, such as a copper, aluminium, or alloy conductor. The overall winding/assembly is generally impregnated with an impregnation varnish, typically an epoxy varnish, so as to maintain coils in place. The insulation provides for electrical integrity and prevents shorts in the magnet wire. Conventional insulation often consists of polymeric enamel films that are applied in successive layers and baked in a furnace; such insulating layers possess a number of advantageous features, including adhesion to the conductor, dielectric performances, bendability/processability, ability to bind to an impregnation varnish and to withstand exposure to the same, thermal resistance. In order to achieve higher dielectric strengths and partial discharge performance to satisfy increasing electrical performance criteria, it is typically necessary to apply a greater number of layers and, therefore, thicken the enamel. However, each successive pass through the baking furnace lowers the adhesive force between the enamel and the conductor, and it is difficult to build the enamel thickness beyond a certain point. Additionally, increased enamel layering may lead to solvent blisters or beading and/or reduced flexibility. Further, thicker insulation layers are detrimental to the general downsizing/high power trend, as directed by the space factor, i.e. the ratio of the cross section of a magnet wire conductor (without the insulation) to the cross section of a slot into which the magnet wire is stored in a motor core, or, otherwise said, the conductor area in a coil slot cut. The larger the space factor becomes, the higher the motor output per size becomes.

General purpose polyamideimides (PAIs) have been suggested for use in this field, because of their easy processing (as enamel), accessibility, and performances, in particular in terms of adhesion to the conductor, windability and thermal resistance; yet, their insulation performances are somehow limited, as phenomena of partial discharge or corona onset may limit their use in thinner/single layer insulating layers conductors. A way of measuring insulating performances of enamels on magnet wires is via the determination of the Partial Discharge Inception Voltage (PDIV), which is the lowest voltage at which partial discharges occur in a test circuit made of the insulated wire at stake, when the test voltage is gradually increased from a lower value. Instead of PDIV, which determination may be affected by a multiplicity of factors related to the geometry of the conductor, thickness and quality of the insulating layer, etc..., insulating material performances may be assessed via the determination of "bulk" dielectric properties (dielectric constant, dielectric loss), which are generally related to PDIV, and which can generally be determined with higher precision. Reverting back to PDIV, the phenomenon of partial discharge happens in an insulating layer when tendrils of current begin to snake out into the insulator, yet without full breakdown: in other words, PDIV is a localized dielectric breakdown which does not completely bridge the space between the two conductors. Indeed, automotive motors, while typically operating at voltages of 400-800V, may face, while current alternates, to brief spikes or overvoltages as high as 1600 V: over time, such spikes, if beyond the PDIV of the insulating layer, may damage the insulation to catastrophic failure of the dielectric.

This is why magnet wires producers are moving away from single-layer conventional polyamideimides (PAIs) enamels, and are in quest of more sophisticated solutions.

There is hence a current shortfall in the art for insulated conductors, in particular insulated magnet wires, whereas the insulating enamel possesses improved dielectric performances, in particular reduced dielectric constant ($D_k$) and reduced dielectric loss (Df), which are known to deliver higher PDIV values, while maintaining all the advantageous properties of the traditional enamels, including easy processing from enamel solutions, excellent adhesion, both during winding and during high temperature operations, and outstanding chemical resistance and adhesion to the outer impregnation varnish.

### Brief disclosure of the invention

The invention is set out in the appended set of claims. An object of the invention is thus an insulated conductor as defined in claims 1-9.

Another object of the invention is a method for making an insulated conductor as defined in any one of claims

10-12.

Another object of the invention is an electric machine or an electric vehicle as defined in claims 13 and 14.

Another object of the invention is the use as defined in claim 15.

More precisions and details about these objects are now provided below.

## Disclosure of the invention

The insulated conductor of the invention comprises:

- a conductor; and
- at least one insulation layer in direct contact with the conductor, wherein the insulation layer comprises or is made of a composition (C) comprising at least one aromatic polyamideimide polymer [polymer (PAI)] comprising recurring units ($R_{PAI}$), said recurring units ($R_{PAI}$) comprising at least one aromatic ring, one amide group and at least one of an amic acid group and an imide group and being selected from the group consisting of units of any of formulae ($R_{PAI}$-A) and ($R_{PAI}$-B):

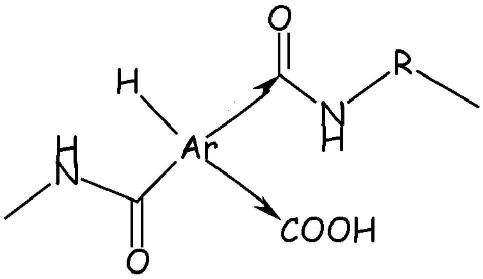

($R_{PAI}$-A)

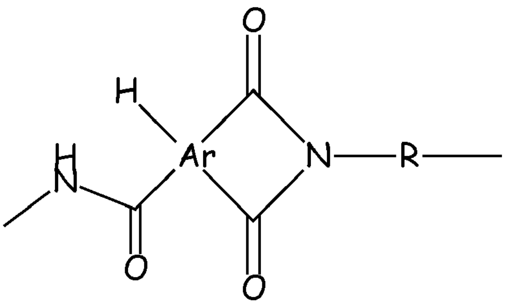

($R_{PAI}$-B)

wherein:

- the → denotes isomerism so that in any recurring unit $R_{PAI}$-A the groups to which the arrows point may exist as shown or in an interchanged position;
- Ar is a tetravalent aromatic group, and is typically selected from the group consisting of:

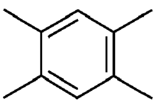 , 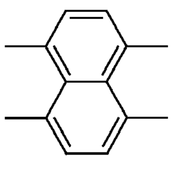 , 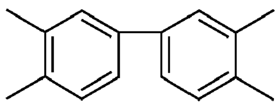 , 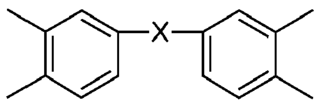

with X = -C(=O)-; -S-, -O-; $-SO_2-$; $-(CH_2)_n-$, $-(CF_2)_n-$, with n= 1,2,3,4 or 5; - $C(CF_3)_2-$, $-C(CH_3)_2-$;
- R is a divalent aromatic group selected from the group consisting of (R-A), (R-B) and (R-C):

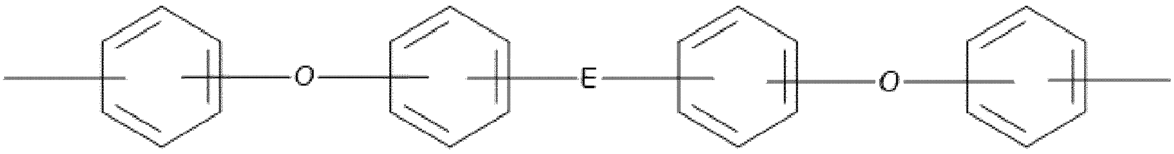

(R-A)

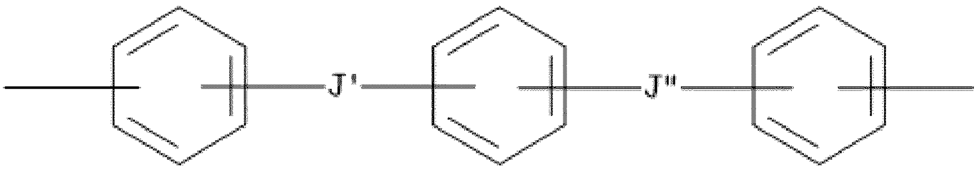

(R-B)

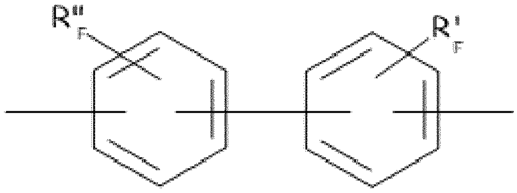

(R-C)

wherein:

- E is a divalent bridging group selected from the group consisting of - $SO_2$-; -$C(CF_3)_2$-, -$C(CH_3)_2$-;
- each of J' and J", equal to or different from each other, are divalent bridging groups independently selected from the group consisting of - $C(CF_3)_2$- and -$C(CH_3)_2$-;
- each of $R'_F$ and $R''_F$, equal to or different from each other, are monovalent (per)fluoroalkyl $C_1$-$C_6$ groups, preferably monovalent perfluoroalkyl $C_1$-$C_6$ groups, e.g. -$CF_3$.

The insulation layer may be formed directly around a conductor. In some embodiments, one or more insulation layers may be formed in direct contact with the conductor.

In other embodiments, the conductor may comprise a surface treatment. The surface treatment is more particularly selected from flame treatment, mechanical abrasion (e.g. shot blasting) and chemical treatment (e.g. etching). The surface is treated to alter its surface prior to the application of the insulation layer. The surface is treated to chemically modify the surface and/or to alter the surface profile.

The at least one insulation layer may be formed by enamelling the composition (C) around the conductor.

In certain embodiments, the conductor may comprise additional layers.

In some embodiments, the conductor is a wire, in particular a magnet wire.

**Composition (C)**

Details and embodiments relating to the composition (C) are now provided. The proportions of the ingredients of the composition (C) are given in wt.% and based on the total weight of the composition (C).

The composition (C) comprises at least one polymer (PAI), as above detailed, generally in an amount of at least 50 wt.%, preferably at least 60 wt.%, more preferably at least 70 wt.%. The upper limit of the amount of polymer (PAI) in the composition (C) is not particularly restricted, and polymer (PAI) may be up to 100 wt.% of composition (C), which means that composition (C) is made of (or essentially made of) polymer (PAI).

Alternatively, composition (C) may comprise polymer (PAI) in an amount of at most 99 wt.%, or at most 95 wt.%, or at most 80 wt.%, or even at most 75 wt.%, depending upon the presence of additional components in the composition (C).

The composition (C) of the insulation layer may comprise only one polymer (PAI) or may comprise a plurality

of polymers (PAI), which may differ in terms of the nature and ratio of the recurring units ($R_{PAI}$) in the polymer, they may differ in the imidization level, or they may differ in terms of molecular weight.

The composition (C) may also comprise one or more than one polymer (PAI) and a polymer of a different nature, such as for instance LCPs, polyimides, and fluoropolymers.

Other than polymer (PAI) or other polymers, as detailed above, the composition (C) may comprise at least one filler in an amount of at most 40 wt.%, and may comprise additional ingredients different from fillers, including at least one additional plastics' additive, for example in an amount of less than 10 wt.%, said additive being advantageously selected from the group consisting of colorants, dyes, pigments, heat stabilizers, antioxidants, lubricants, plasticizers, flame retardants, smoke-suppressing agent, antistatic agents, anti-blocking agents, film-forming adjuvants, surfactants, nucleating agents, processing aids, fusing agents, electromagnetic absorbers and combinations thereof, wherein the wt.% is based on the total weight of the composition (C).

When one or more plastics' additive are present, the composition (C) can include advantageously no more than 10 wt. % or no more than 5 wt. % of one or more other additives, relative to the total weight of the composition (C). Most preferably, the proportion of the plastic additive(s) is less than 5.0 wt.%.

Said filler may be a reinforcing agent selected from the group consisting of fibrous reinforcing fillers, particulate reinforcing fillers and mixtures thereof. A fibrous reinforcing filler is considered herein to be a material having length, width and thickness, wherein the average length is significantly larger than both the width and the thickness. Generally, a fibrous reinforcing filler has an aspect ratio, defined as the average ratio between the length and the largest of the width and the thickness of at least 5, at least 10, at least 20 or at least 50.

Fibrous reinforcing fillers include glass fibers, carbon or graphite fibers, and fibers formed of silicon carbide, alumina, titania, boron and the like, and may include mixtures comprising two or more such fibers. Non-fibrous reinforcing fillers include notably talc, mica, titanium dioxide, calcium carbonate, potassium titanate, silica, kaolin, chalk, alumina, mineral fillers, and the like.

Preferably, said at least one filler is a fibrous reinforcing filler. Among fibrous reinforcing fillers, glass fibers and carbon fibers are preferred. According to a preferred embodiment of the invention, said composition (C) comprises up to 40 wt.% of glass fibers and/or carbon fibers, for example from 30 to 40 wt.%, based on the total weight of the composition (C).

Embodiments whereas the composition (C) does not include any filler are encompassed in the present invention.

## Polymer (PAI)

In some embodiments, the polymer (PAI) comprises a major amount (exceeding 50 mol.%) of recurring units ($R_{PAI}$), as described above, with respect to the total amount of recurring units of polymer (PAI). In particular, in some embodiments, polymer (PAI) comprises at least 60 mol. %, at least 80 mol. %, at least 90 mol. %, at least 95 mol. % or at least 98 mol. % recurring units ($R_{PAI}$), as described above, with respect to the total amount of recurring units of polymer (PAI).

In some embodiments, in recurring unit ($R_{PAI}$), the phenylene moieties of group R in formulae (R-A), (R-B) and (R-C) can independently have 1,2-, 1,4- or 1,3 -linkages to the other connected moieties.

The polymer (PAI) may further comprise a minor amount of recurring units ($R°_{PAI}$) which are units comprising at least one aromatic ring, one amide group and at least one of an amic acid group and an imide group and which are different from recurring units ($R_{PAI}$), said recurring units ($R°_{PAI}$) being generally of any of formulae ($R°_{PAI}$-A) and ($R°_{PAI}$-B):

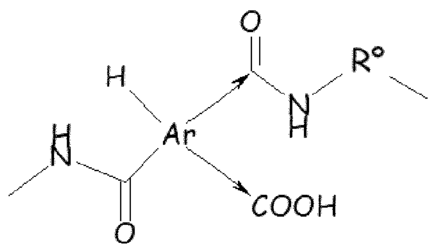

($R°_{PAI}$-A)

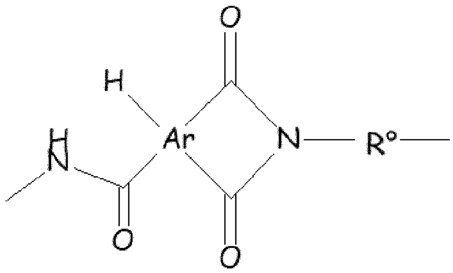

(R°$_{PAI}$-B)

wherein:

- the → denotes isomerism so that in any recurring unit $R_{PAI}$-A the groups to which the arrows point may exist as shown or in an interchanged position;
- Ar has the same meaning as in formulae ($R_{PAI}$-A) and ($R_{PAI}$-B); and
- R° is a divalent aromatic group different from (R-A), (R-B) and (R-C), which is generally selected from the group consisting of (R°-D), (R°-E), (R°-F), (R°-G) :

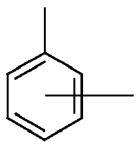

(R°-D)

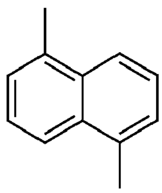

(R°-E)

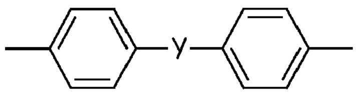

(R°-F),

with Y = -C(=O)-; -S-, -O-; $-SO_2-$; $-(CH_2)_n-$, $-(CF_2)_n-$, with n= 0, 1,2,3,4 or 5; $-C(CF_3)_2-$, $-C(CH_3)_2-$;

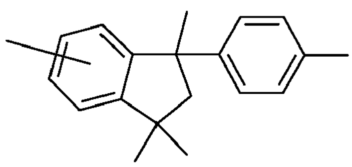

(R°-G).

Simultaneously, or alternatively, the polymer (PAI) may further comprise a minor amount of recurring units ($R_{PI}$), which are units comprising at least one aromatic ring, and two groups selected from amic acid groups and an imide groups, and which are different from recurring units ($R_{PAI}$), wherein said recurring units ($R_{PI}$) are generally selected from the group consisting of units of formulae ($R_{PI}$-a), ($R_{PI}$-b) and ($R_{PI}$-c):

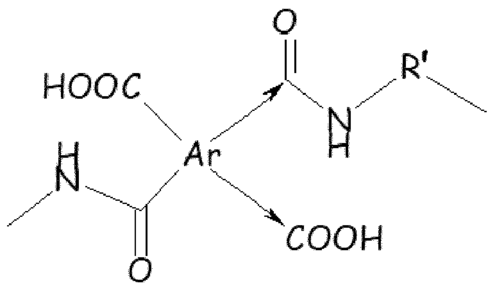

($R_{PI}$-a)

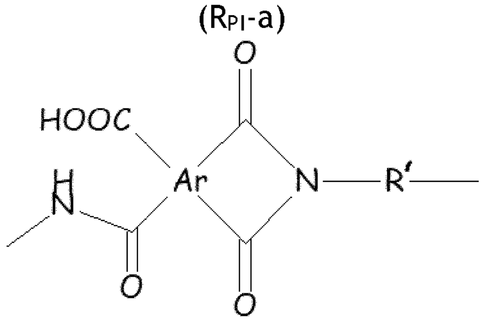

($R_{PI}$-b)

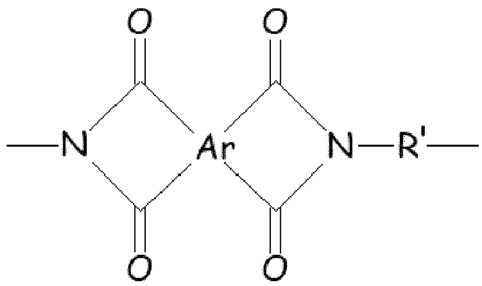

($R_{PI}$-c)

wherein:

- the → denotes isomerism so that in any recurring unit $R_{PAI}$-A the groups to which the arrows point may exist as shown or in an interchanged position;
- Ar has the same meaning as in formulae ($R_{PAI}$-A) and ($R_{PAI}$-B)
- R' is a group R of any of formulae (R-A), (R-B) and (R-C), as defined in formulae ($R_{PAI}$-A) and ($R_{PAI}$-B), or is a group R° of any of formulae (R°-D), (R°-E), (R°-F), (R°-G), as defined in formulae ($R°_{PAI}$-A) and ($R°_{PAI}$-B).

When recurring units ($R°_{PAI}$) and/or recurring units ($R_{PI}$) are present in polymer (PAI), the sum of their amount if of less than 50 mol. %, less than 40 mol. %, less than 10 mol. %, less than 5 mol. % or even less than 2 mol. %, with respect to the total amount of recurring units of polymer (PAI).

Embodiments where polymer (PAI) does not comprise recurring units ($R°_{PAI}$) and/or recurring units ($R_{PI}$) are within the scope of the invention, and are generally preferred. Hence, polymer (PAI), according to certain preferred embodiments is a polymer essentially consisting of recurring units ($R_{PAI}$), as detailed above. The expression "essentially consisting", when used for characterizing constituent moieties of polymer (PAI) is meant to indicate that minor amounts of spurious units (e.g. less than 0.1 wt.%), impurities or chain ends may be present, without this modifying the advantageous attributes of polymer (PAI).

Imidization degree of polymer (PAI) is not particularly limited, and can be tuned during the manufacture of the insulated conductor of the invention. Within the frame of the present invention, the imidization degree is the fraction of imide groups in the overall amount of imidized/imidizable groups, i.e. the overall amount of imide and amic acid groups.

When polymer (PAI) comprises units ($R_{PAI}$), ($R°_{PAI}$) and ($R_{PI}$), as detailed above, the imidization degree can

be computed as follows :

$$\text{Imidization degree (\%)} = \text{amount of imide groups/amount of (amic acid groups+imide groups)x100; ,}$$

and can be determined considering that units of formula ($R_{PAI}$-A) and ($R°_{PAI}$-A) comprise one amic acid group; units of formula ($R_{PAI}$-B) and ($R°_{PAI}$-B) comprise one imide group; units of formula ($R_{PI}$-a) comprise two amic acid groups; units of formula ($R_{PI}$-b) comprise one amic acid group and one imide group; and units of formula ($R_{PI}$-c) comprise two imide groups.
In other words, for polymer (PAI) comprising units ($R_{PAI}$), ($R°_{PAI}$) and ($R_{PI}$), as detailed above, the imidization degree can be computed as follows

$$\text{Imidization degree (\%)} = [\text{amount of units of formula } (R_{PAI}\text{-B}) \text{ and } (R°_{PAI}\text{-B}) + 2 \times \text{amount of units of formula } (R_{PI}\text{-c}) + \text{amount of units of formula } (R_{PI}\text{-b})]/[\text{amount of units } (R_{PAI}) \text{ and } (R°_{PAI}) + 2 \times \text{amount of units of formula } (R_{PI})] \times 100.$$

When recurring units ($R°_{PAI}$) and/or ($R_{PI}$), are absent, the formula above can be simplified accordingly. For polymer (PAI) essentially consisting of recurring units ($R_{PAI}$), imidization degree is determined as:

$$\text{Imidization degree (\%)} = [\text{amount of units of formula } (R_{PAI}\text{-B})]/[\text{amount of units } (R_{PAI})] \times 100.$$

Imidization degree in polymer (PAI) of the insulated conductor is generally of at least 50%, preferably at least 60%, more preferably at least 80%. Such degree of imidization is generally obtained by baking the insulating layer onto the conductor, as this will be explained later. Imidization degrees of 80% or more, up to complete imidization, are hence encompassed within the scope of the present invention. Lower boundaries for imidization degree are not particularly critical, but are generally arranged to be of at least 50 %, as those imidization degrees are recognized as being beneficial to the purposes of mechanical resistance of the insulating layer made of or comprising polymer (PAI).

In recurring units ($R_{PAI}$) of polymer (PAI), group Ar is preferably a group of formula

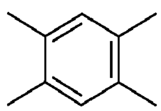

.

In recurring units ($R_{PAI}$) of polymer (PAI), group R is preferably selected from the group consisting of:

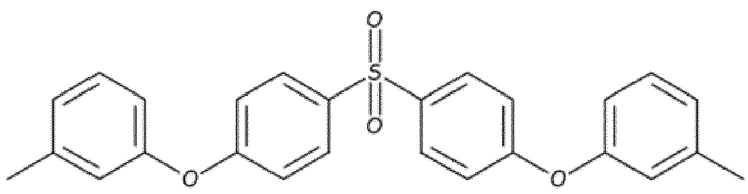

(R-A-1-*m*)

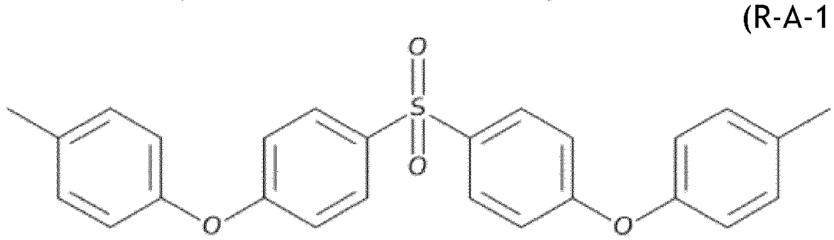

(R-A-1-*p*)

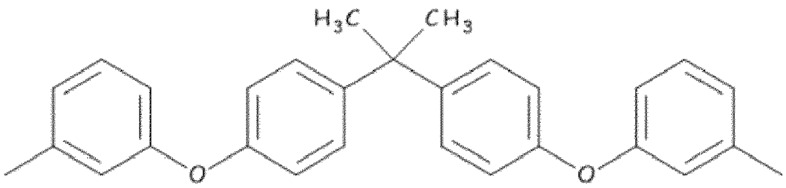

(R-A-2-*m*)

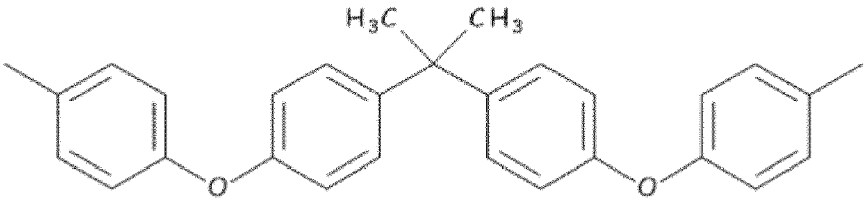

(R-A-2-*p*)

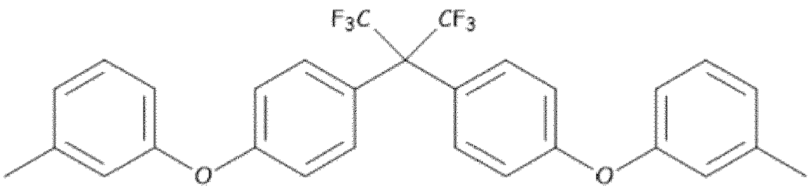

(R-A-3-*m*)

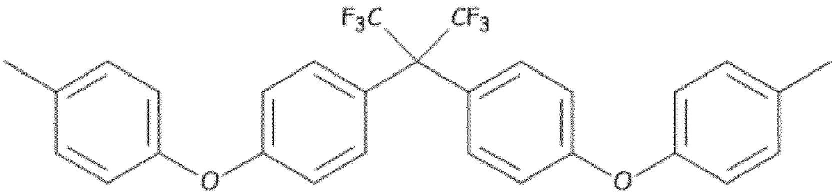

(R-A-3-*p*)

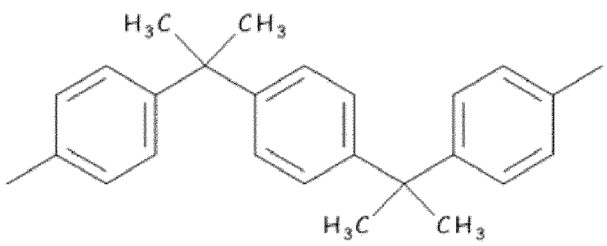

(R-B-1)

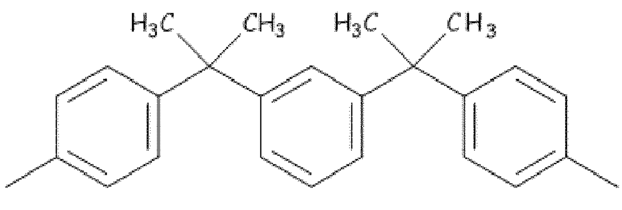

(R-B-2)

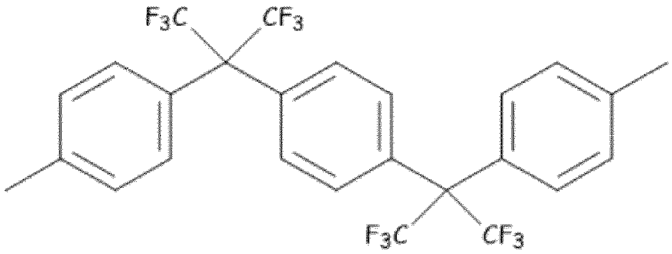

(R-B-3)

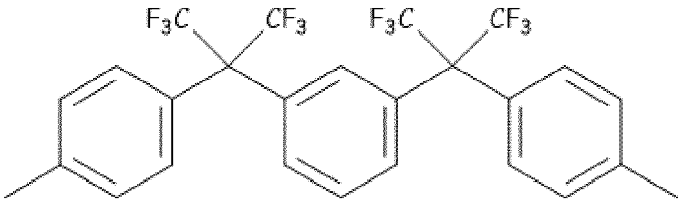

(R-B-4)

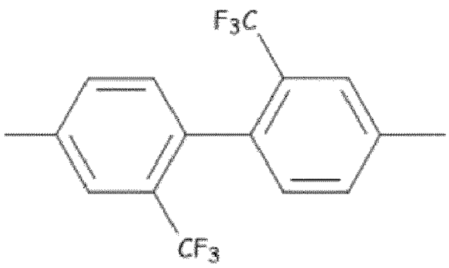

(R-C-1).

In recurring units ($R_{PAI}$) of polymer (PAI), group R is preferably selected from the group consisting of groups (R-A-1-m), (R-A-2-p), (R-A-3-p), (R-B1), (R-B-2) and (R-C-1) reproduced below:

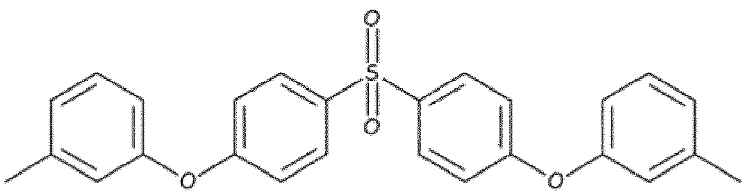

(R-A-1-*m*)

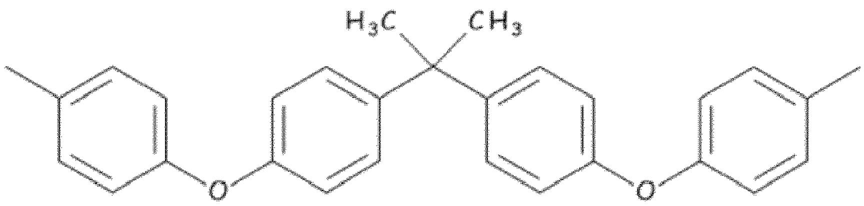

(R-A-2-*p*)

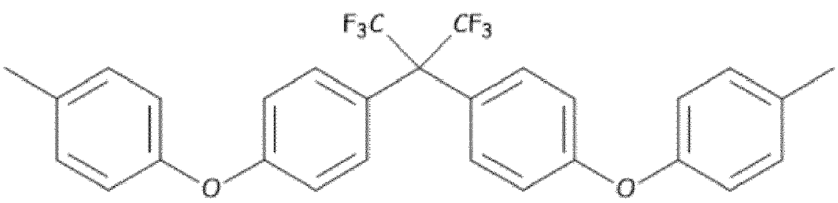

(R-A-3-*p*)

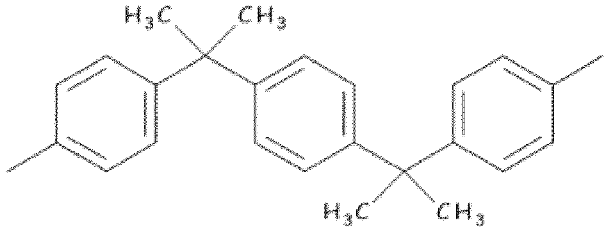

(R-B-1)

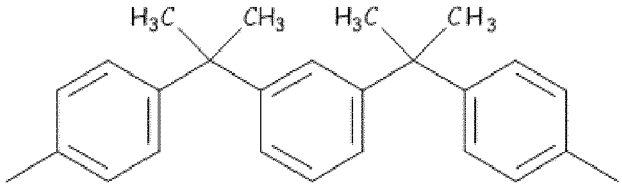

(R-B-2)

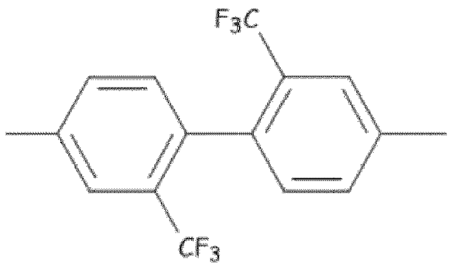

(R-C-1).

The polymer (PAI) can be notably manufactured by a process including the polycondensation reaction between (I) at least one aromatic acid monomer comprising an aromatic group, an anhydride group and a carboxy group, in its acid or acid halide form, including any derivatives thereof, and (II) at least one diamine of any of formulae (R-Aamine), (R-Bamine) and (R-$C_{amine}$):

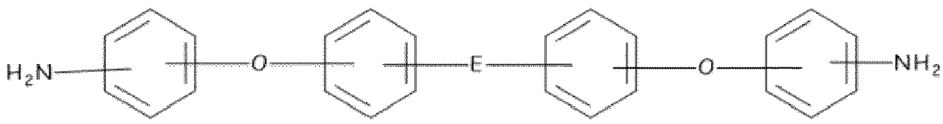

(R-$A_{amine}$)

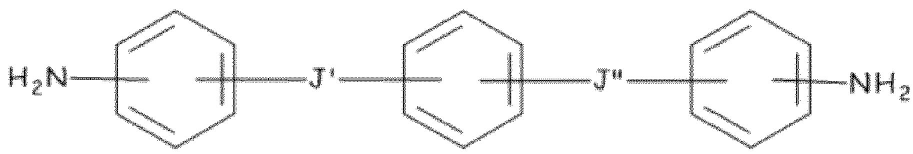

(R-$B_{amine}$)

and

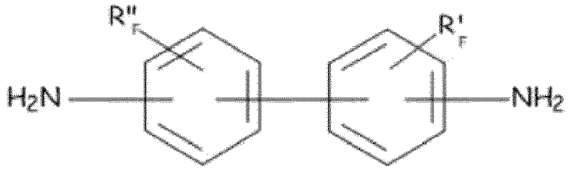

(R-$C_{amine}$)

wherein E, J', J", $R'_F$ and $R''_F$ have the meaning defined above.

Preferably, the diamines (II) used for the manufacture of the polymer (PAI) of the insulated conductor of the invention are selected from the group consisting of:

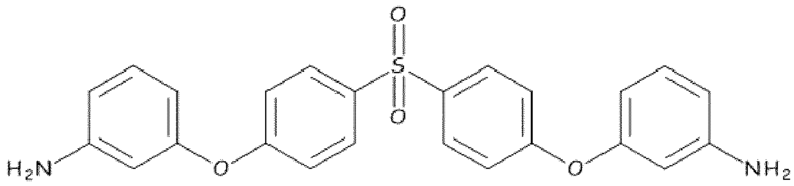
(*m*BAPS)

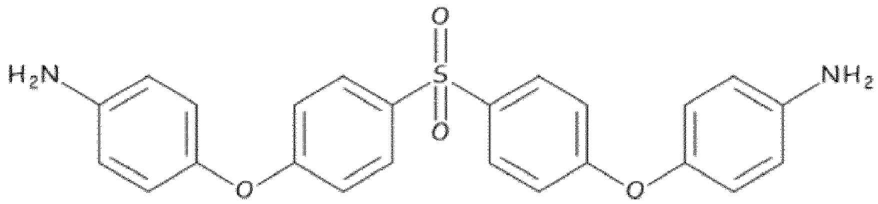
(*p*BAPS)

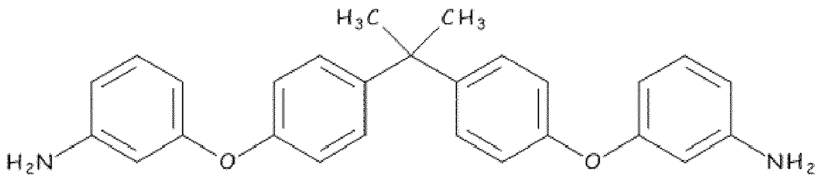
(*m*BAPP)

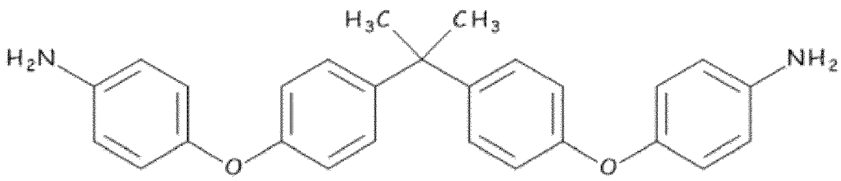
(*p*BAPP)

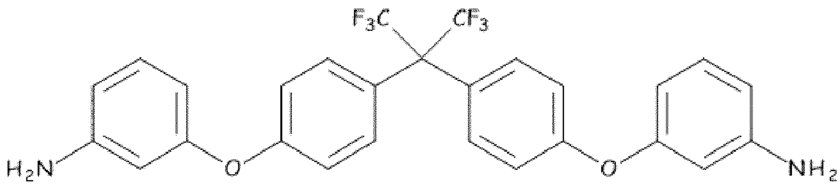
(*m*HFBAPP)

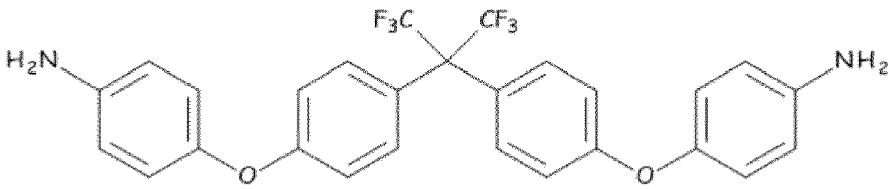
(*p*HFBAPP)

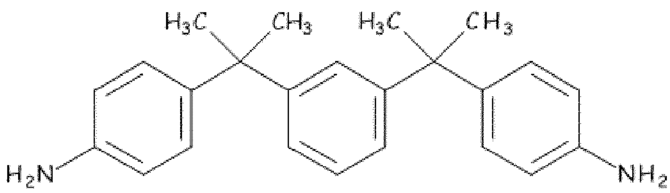
(bisaniline M)

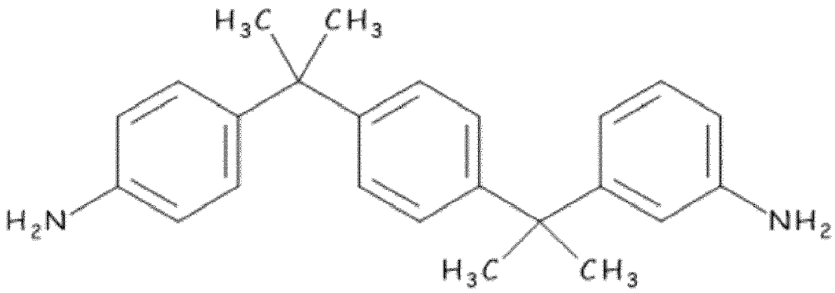

(bisaniline P)

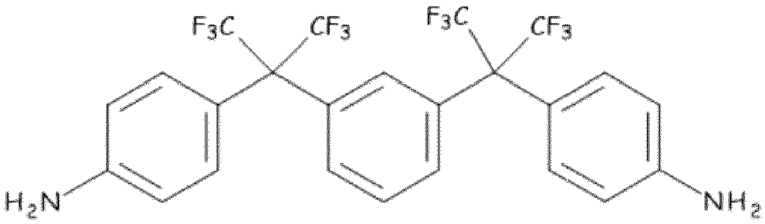

(bis-HF-aniline M)

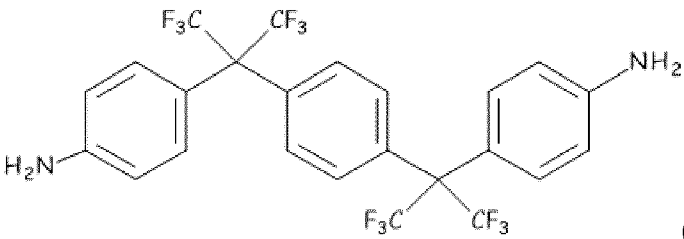

(bis-HF-aniline P)

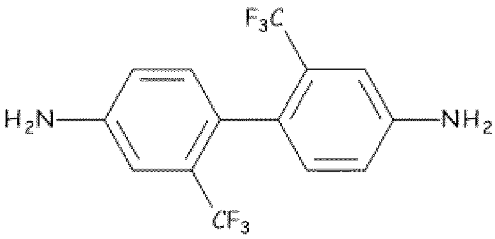

(TFMB).

More preferably, the diamines (II) used for the manufacture of the polymer (PAI) of the insulated conductor of the invention are selected from the group consisting of *m*BAPS, *p*BAPP, *p*HFBAPP, bisaniline M, bisaniline P and TFMB, reproduced below:

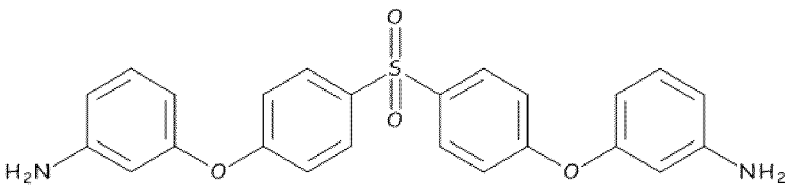

(*m*BAPS)

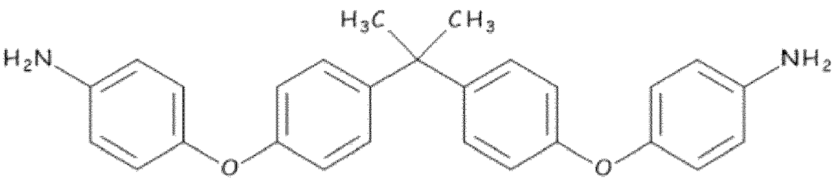

(*p*BAPP)

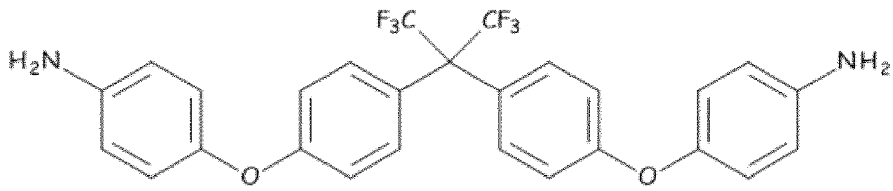

(*p*HFBAPP)

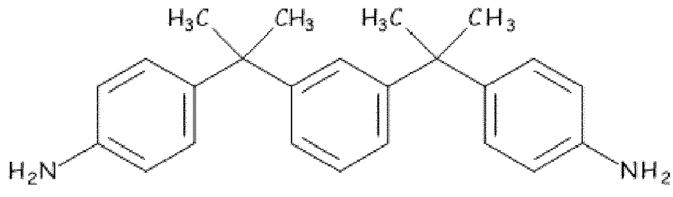

(bisaniline M)

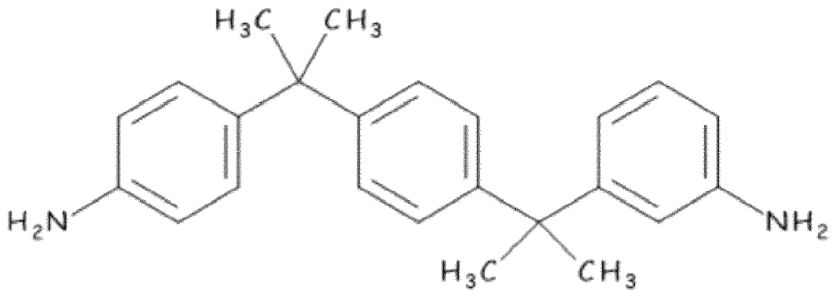

(bisaniline P)

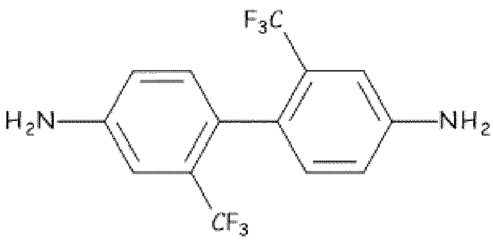

(TFMB).

As monomer of type (I), trimellitic anhydride and derivatives thereof and trimellitic anhydride monoacid halides, in particular trimellitic anhydride monoacid chloride, are preferred.

When the polyamide (PAI) is intended to include recurring units ($R°_{PAI}$) as detailed above, (III) additional diamine monomers different from diamine of any of formulae (R-Aamine), (R-Bamine) and (R-Camine) are used ; as per monomers of type (III), use can be notably made of 4,4'-diaminodiphenylmethane, 4,4'-diaminodiphenylether, m-phenylenediamine, para-phenylenediamine, 4,4'-diaminodiphenylsulfone, 4,4'-diaminodiphenylsulfide, and mixtures thereof.

When the polyamideimide (PAI) is intended to include recurring units ($R_{PI}$) as detailed above, (IV) aromatic dianhydride monomers (or derivatives thereof) can be used, such as pyromellitic anhydride, bis(3,4-dicarboxyphenyl)ether dianydride, possibly in combination with monomers of type (III), detailed above.

Polymers (PAI) which gave very good results in the insulated conductor of the present invention are:

- polymers (PAI-*m*BAPS) comprising, or even preferably consisting essentially of the following recurring units:

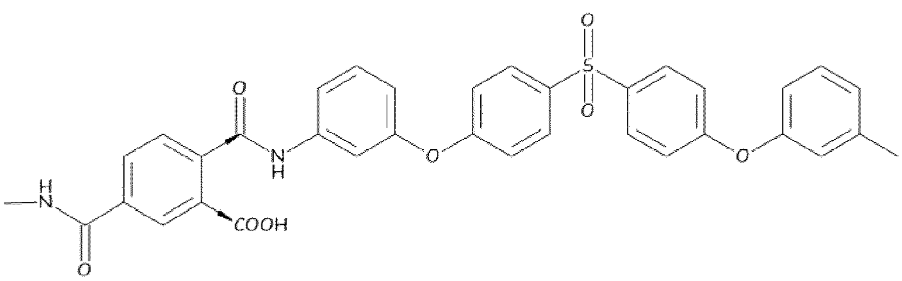

($R_{PAI-mBAPS}$-A)

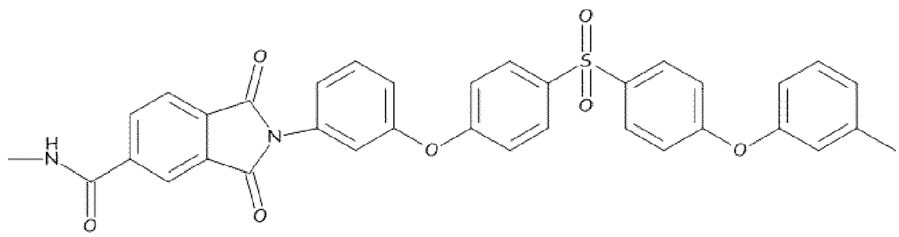

($R_{PAI-mBAPS}$-B)

- polymers (PAI-*p*BAPS) comprising, or even preferably consisting essentially of the following recurring units:

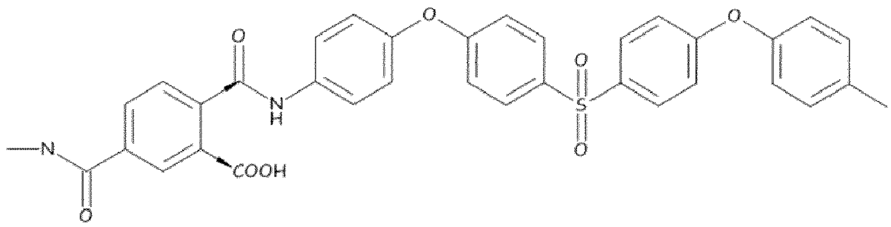

($R_{PAI-pBAPS}$-A)

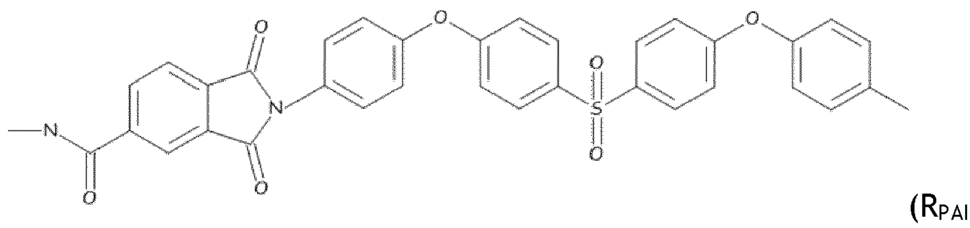

($R_{PAI-pBAPS}$-B)

- polymers (PAI-*m*BAPP) comprising, or even preferably consisting essentially of the following recurring units:

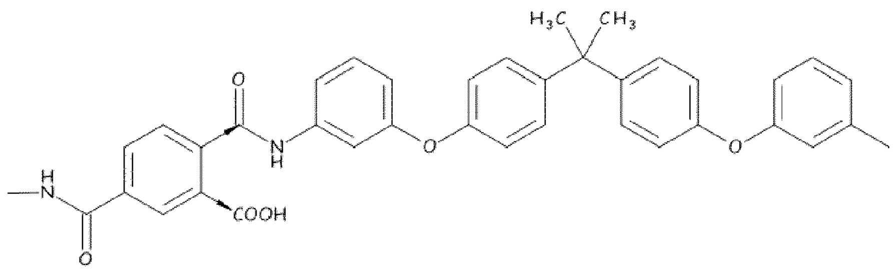

($R_{PAI-mBAPP}$-A)

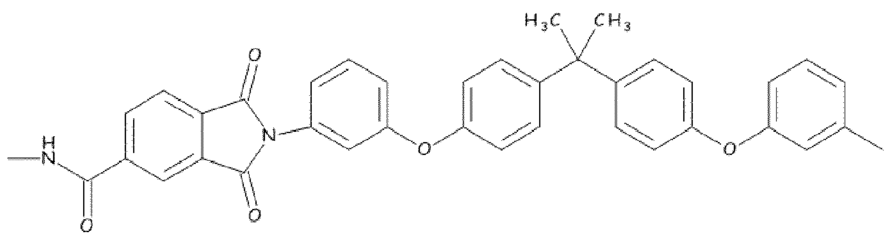

($R_{PAI-mBAPP}$-B)

- polymers (PAI-*p*BAPP) comprising, or even preferably consisting essentially of the following recurring units:

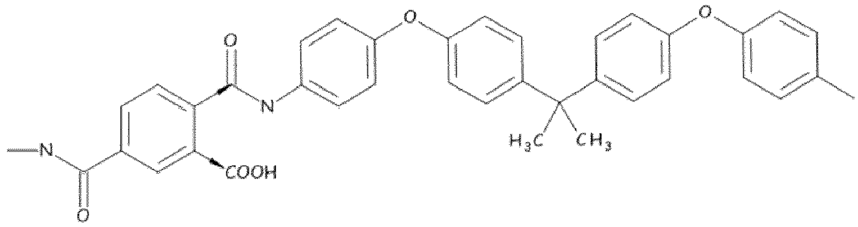

($R_{PAI\text{-}pBAPP}$-A)

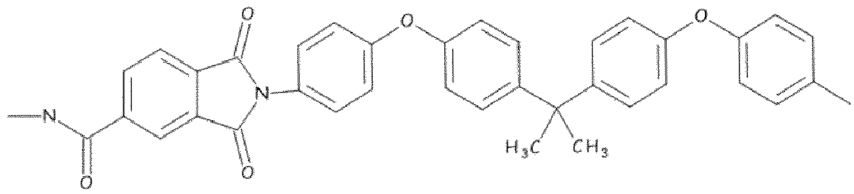

($R_{PAI\text{-}pBAPP}$-B)

- polymers (PAI-*m*HFBAPP) comprising, or even preferably consisting essentially of the following recurring units:

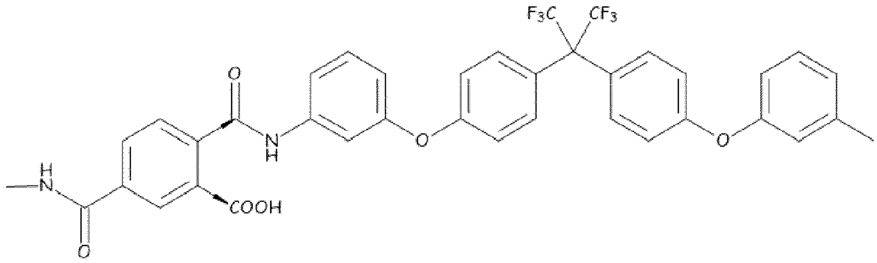

($R_{PAI\text{-}mHFBAPP}$-A)

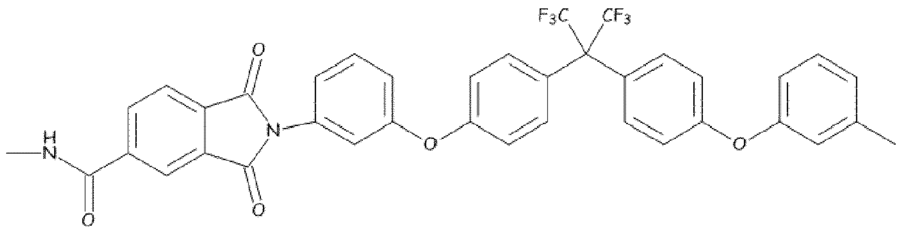

($_{PAI\text{-}mHFBAPP}$-B)

- polymers (PAI-*p*HFBAPP) comprising, or even preferably consisting essentially of the following recurring units:

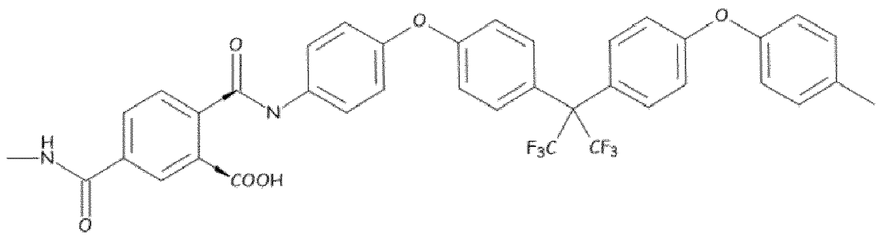

($R_{PAI\text{-}pHFBAPP}$-A)

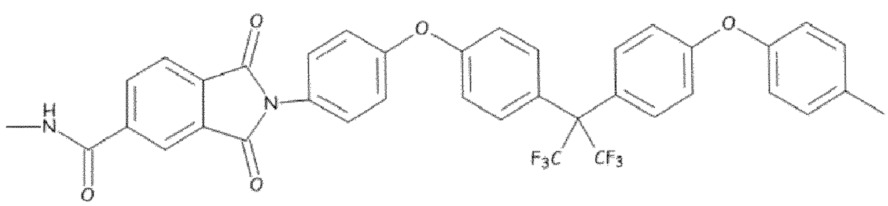

($R_{PAI\text{-}pHFBAPP}$-B)

- polymers (PAI-bisaniline M) comprising, or even preferably consisting essentially of the following recurring units:

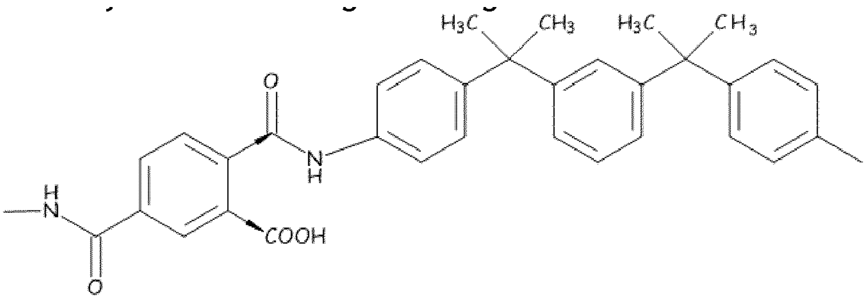

(RPAI-BAM-A)

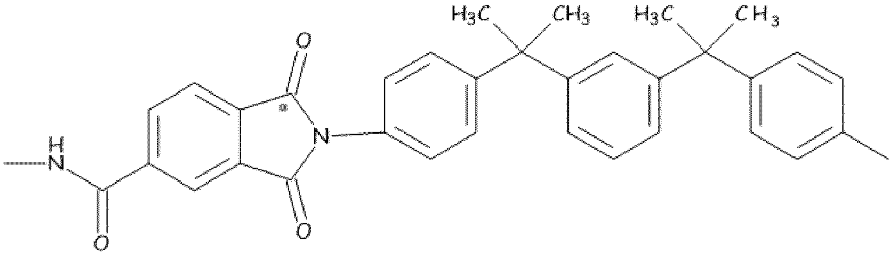

(RPAI-BAM-B)

- polymers (PAI-bisaniline P) comprising, or even preferably consisting essentially of the following recurring units:

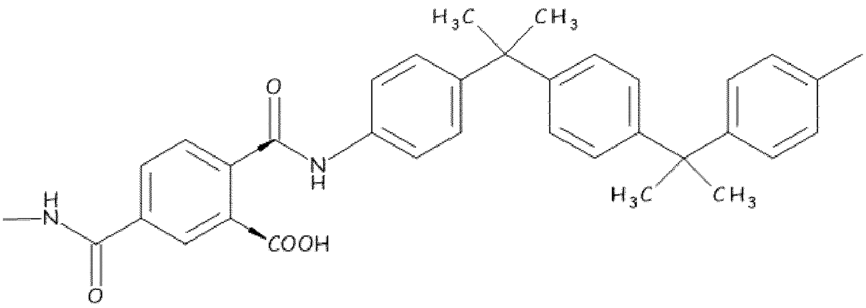

(RPAI-BAP-A)

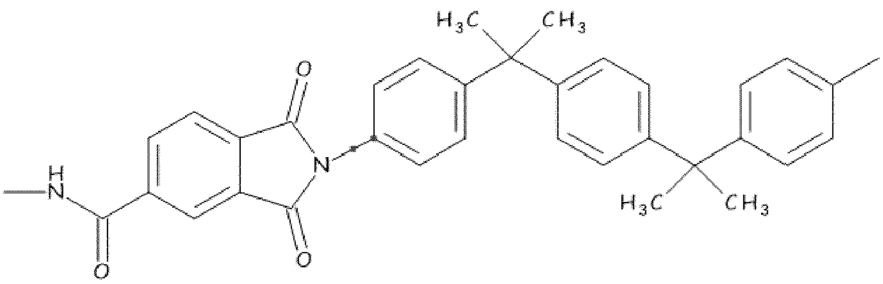

(RPAI-BAP-B);

- polymers (PAI-bis-HF-aniline M) comprising, or even preferably consisting essentially of the following recurring units:

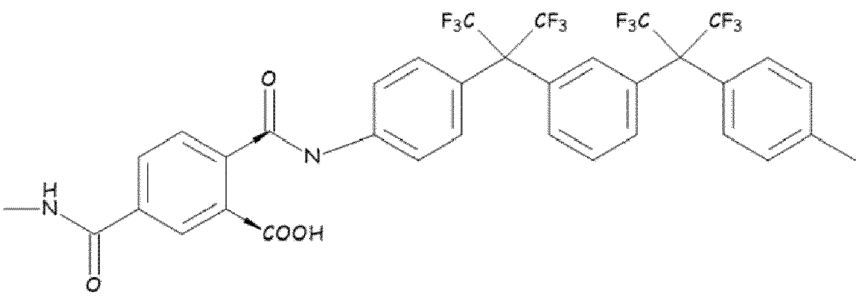

(RPAI-HFBAM-A)

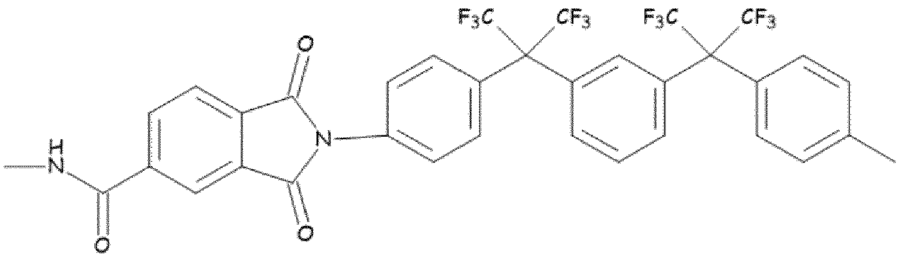

($R_{PAI\text{-}HFBAM}$-B)

- polymers (PAI-bis-HF-aniline P) comprising, or even preferably consisting essentially of the following recurring units:

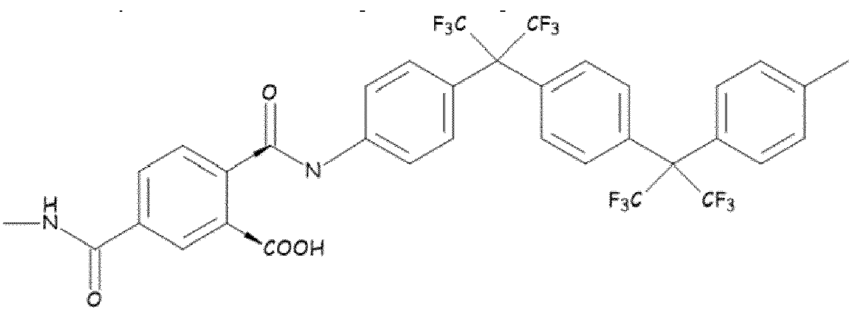

($R_{PAI\text{-}HFBAP}$-A)

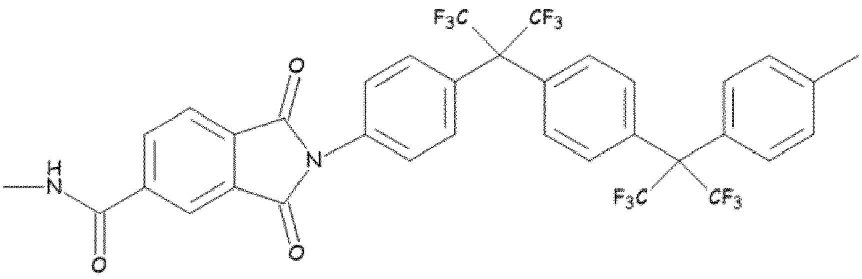

($R_{PAI\text{-}HFBAP}$-B);

- polymers (PAI-TFMB) comprising, or even preferably consisting essentially of the following recurring units:

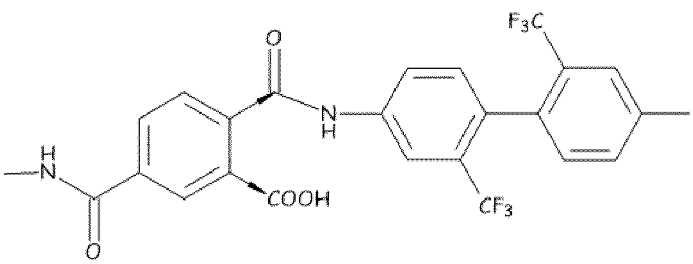

($R_{PAI\text{-}TFMB}$-A)

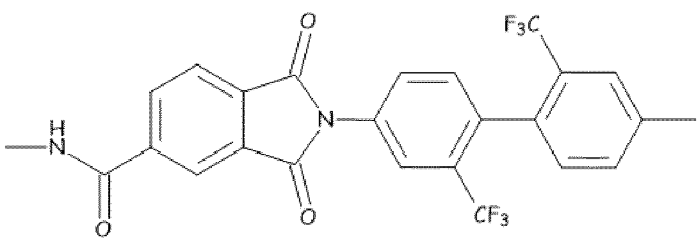

($R_{PAI\text{-}TFMB}$-B).

Polymers (PAI) which gave very good results in the insulated conductor of the present invention are polymers

(PAI-*m*BAPS), polymers (PAI-*p*BAPP), polymers (PAI-*p*HFBAPP) polymers (PAI-bisaniline M), polymers (PAI-bisaniline P) and polymers (PAI-TFMB), as described above.

The polycondensation reaction is advantageously carried out under substantially anhydrous conditions in an organic solvent, generally a polar aprotic solvent, employing substantially stoichiometric quantities of the acid monomer (I) and of the diamine monomer (II). A slight stoichiometric excess, usually from about 0.5 to about 5 mole %, of either monomer, preferably of the acid monomer, can be employed if desired in order to control molecular weight; alternatively a monofunctional reactant can be employed as an endcapping agent for this purpose, and to improve stability. The polycondensation is generally initiated at a first temperature $T_1$ which is generally lower than 40°C, lower than 30°C, especially lower than 20°C, e.g. of about 10°C or less. Polycondensation temperature is generally increased to a temperature $T_2$ higher than $T_1$ during the polycondensation reaction; temperature $T_2$ may be up to 80°C, preferably up to 60°C, or up to 40°C.

The polymer (PAI) maybe advantageously isolated in solid form under mild conditions, preferably by being coagulated or precipitated from the polar reaction solvent by adding a miscible non-solvent, for example water, a lower alkyl alcohol or the like. Optionally, the solid resin may then be collected and thoroughly washed with water, and centrifuged or pressed to further reduce the water content of the solid without applying heat. Nonsolvents other than water and lower alkyl alcohols are known and have been used in the art for precipitating aromatic polyamic acid (A) from solution including, for example, ethers, aromatic hydrocarbons, ketones and the like.

## Insulation layer

In some embodiments, the insulation layer consists of the composition (C) as above detailed.

The thickness of the insulation layer is typically less than 200 μm, even less than 180 μm. The thickness of the insulation layer is preferably 5 μm or more, and more preferably 15 μm or more.

The composition (C) provides a good insulation of the conductor, with outstanding dielectric properties, and advantageous adhesion, chemical and thermal resistance, which may enable decreasing the thickness of the insulating layer, while still ensuring appropriate performances notably in terms of PDIV.

## Conductor

The conductor may be formed from a wide variety of suitable materials and/or combinations of materials. For example, the conductor may be formed from copper, aluminum, annealed copper, oxygen-free copper, silver-plated copper, nickel plated copper, copper clad aluminum, silver, gold, a conductive alloy, a bimetal, carbon nanotubes, or any other suitable electrically conductive material. Typically, the conductor is a copper-based conductor. Typically, the conductor consists essentially of copper.

Additionally, the conductor may be formed with any suitable dimensions and/or cross-sectional shapes. The conductor may be a wire, and may have a circular or round cross-sectional shape or it may be formed with a square shape, a rectangular shape, an elliptical or oval shape, or any other suitable cross-sectional shape.

The conductor may have any suitable dimensions, such as any suitable gauge, diameter, height, width, cross-sectional area, etc.

The insulated conductor may comprise one or more than one additional outer layers with the *proviso* that the insulation layer comprising or made of composition (C), as above defined, is in direct contact with the surface of the conductor.

When an outer layer is present, it can comprise or be made of compositions based on thermoplastic polymers, such as notably polyaryletherketones, polyarylethersulfones, polyimides, and mixtures thereof.

In certain embodiments, in addition to the insulation layer comprising or made of composition (C) and or the additional outer layer, the insulated conductor may include one or more sheathing made from wraps or tapes. For instance a polymeric tape may be wrapped around the insulated conductor.

The insulated conductor may be an insulated wire. The conductor of this embodiment is hence a wire which may have a circular cross-section. Generally speaking the cross-section of the wire is dictating the cross-section of the insulated wire comprising the same, as the insulating layer is generally applied at a homogeneous thickness, so reproducing the cross-section of the wire beneath.

The insulated wire may also have a non-circular cross-section. For instance, the wire may have a square shape cross-section, a rectangular sharp cross-section, an elliptical cross-section or oval shape cross-section. The insulated wire may also have a cross-section which is substantially square, substantially rectangular, substantially elliptical or substantially oval.

More particularly, the insulated wire may exhibit a cross-section which includes a first outwardly facing surface and a second outwardly facing surface, wherein said first and second surfaces are preferably substantially planar and, preferably, said first and second surfaces face in opposite directions but extend substantially parallel to one another.

## Method for making the insulated conductor

A further object of the invention is a method for making the insulated conductor.

In certain embodiments, the conductor may be formed in tandem with the application of the insulation layer. In other embodiments, a conductor with desired dimensions may be pre-formed or obtained from an external source. The insulation layer may then be applied or otherwise formed on the conductor.

In certain embodiments, the insulation layer is enamelled on the surface of the conductor. The insulation layer may be formed directly around the conductor using known coating techniques.

Generally, a liquid composition (LC) comprising composition (C) and a solvent is applied to the conductor. Such liquid composition (LC) may be applied notably by passing the conductor through and enamelling die equipped with a calibrated slot that pour the quantity of liquid composition on the conductor necessary to achieve the target thickness, so as to obtain a conductor charged with said liquid composition (LC). The conductor charged is then submitted to a thermal treatment, in general by heating into an oven. During such thermal treatment, the evaporation of the solvent of the liquid composition (LC) takes place, and the polymer (PAI) of the composition (C) may harden by increasing imidization degree.

Generally, the imidization degree of polymer (PAI) in the liquid composition (LC) is not particularly limited, that is to say it can be in the range of 0 to 100%; yet, from a practical perspective an imidization degree of 20% to 60% would be advantageous.

The choice of solvent suitable for the preparation of the liquid composition (LC) is not particularly limited. Polar high boiling organic solvents can be used, including notably N-methyl-pyrrolidone (NMP). Yet, liquid compositions (LC) whereas the solvent is water or an aqueous mixture can be equally be used.

Such process may be repeated, if needed, to increase thickness of the insulating layer.

The enamelled insulation layer may be formed with any suitable thickness as desired. The insulation layer thickness is selected in such a way to be thin enough to allow a relatively tight packing of the resulting insulating conductor, for example in an electric motor, but thick enough to provide suitable insulation and/or mechanical resistance.

In other embodiments, one or more suitable surface modification treatments may be utilized on the conductor to promote adhesion with the insulation layer. For example, the surface of the conductor may be roughened. Roughening can include etching (e.g. chemical etching or laser etching), mechanical grinding, or any combination therefore. Examples of alternative and/or additional surface modification treatments include, but are not limited to, a plasma treatment, an ultraviolet ("UV") treatment, a corona discharge treatment, and/or a gas flame treatment. A surface treatment may alter the topography of a conductor and/or form functional groups on the surface of the conductor that enhance or promote bonding of a subsequently formed insulation layer. As a result, surface treatments may reduce interlayer delamination.

## Insulated wire

The insulated conductor may be an insulated wire. The insulated wire of the invention may be used in a wide variety of applications, including a wide variety of electric machines and devices, such as inverter drive motors, motor starter generators, transformers and the like. Preferably, the insulated wires of the invention finds application in the electric motors for automotive.

A coil comprising windings of the insulated wire of the invention is another object of the present invention.

The coil may comprise an outer layer of an impregnation varnish. The impregnation varnish may be an epoxy varnish. When the coil comprises an impregnation varnish, the insulating layer of the insulated wire may comprise a pre-treatment for increasing adhesion to the said impregnation varnish.

The insulated wire or the coil of the present invention can be used in induction motors; for instance it can be used as a magnet wire in an electric motor, in particular as a magnet wire in the stator of an asynchronous induction motor,

The electrical machine may be used in electric vehicles or in hybrid electric vehicles, including plug-in hybrid vehicles.

The electrical machine may also be an electric motor, an alternator or a generator. This electrical machine generally comprises a stator and a rotor. The stator may comprises a metallic core with slots stuffed with coils of insulated wires of the invention, which may be coiled/weaved with specific geometries. Denser windings improve torque capability: the particular advantageous performances of the insulating layer of the present invention is such to reduce thickness and enable access to such denser windings. The invention extends to a stator incorporating the insulated wire of the invention or incorporating the coil of the invention.

Another object of the invention is an electric vehicle powered by an electric motor including the insulated wire according to the present invention.

Should the disclosure of any patents, patent applications, and publications which are incorporated herein by reference conflict with the description of the present application to the extent that it may render a term unclear, the present description shall take precedence.

The present invention is described in greater detail below by referring to the Examples; however, the present invention is not limited to these examples.

## EXAMPLES

## RAW MATERIALS

1-methyl-2-pyrollidone ("NMP"): obtained from VWR
trimellitic anhydride chloride ("TMAC"): obtained from Twin Lakes
4,4'-methylene dianiline ("MDA"): obtained from Aceto Corporation
4,4'-bis(3-aminophenoxy)diphenyl sulfone ("mBAPS"): obtained from TCI
2,2-bis[4-(4-aminophenoxy)phenyl]propane ("pBAPP"): obtained from TCI
2,2-bis[4-(4-aminophenoxy)phenyl]hexafluoropropane ("pHFBAPP"): obtained from Matrix
2,2'-bis(trifluoromethyl)benzidine ("TFMB"): obtained from Accela Chembio
1,3-bis[2-(4-aminophenyl)-2-propyl]benzene ("Bisaniline M" or "BAM"): obtained from TCI
1,4-bis[2-(4-aminophenyl)-2-propyl]benzene ("Bisaniline P" or "BAP"): obtained from TCI.

## SYNTHESIS

### Reference Example 1: MDA/TMAC-based PAI

A 500-mL multi-neck flask equipped with a mechanical stirrer, low-pressure nitrogen, and a heated addition funnel containing TMAC was charged with 62.26 g MDA (0.314 mol) and 250 g of NMP and cooled to 9 °C. Molten TMAC (66.46 g, 0.316 mol) was added gradually to the agitated solution so as to maintain the reaction temperature between 35-40 °C. Once complete, the TMAC funnel was rinsed with 50 g NMP bringing the total amount of NMP used to 300 g. The reactor was held at 35 °C for 2 hours. The resulting viscous liquid was coagulated in a 1 gallon blender with 3 L deionized (DI) water forming solid precipitated granules. These were continuously rinsed with DI water until the conductivity of the filtrate dropped below 50 μS. This material was dried in a vacuum oven at 90 °C overnight to afford 112.09 g of a light yellow granular solid. This material had an IV of 0.26 dL/g, an Mw of 9,400 g/mol, and a $T_g$ of 290 °C. A film was cast from a 25 wt. % solution in NMP, heated for 30 min at 100 °C, ramped to 260 °C at 2.5 °C/min, and then held at 260 °C for 30 min before being allowed to cool. The resulting 30 μm film had a $D_k$ of 3.6 and $D_f$ of 0.017 at 5 GHz, a $D_k$ of 3.5 and $D_f$ of 0.017 at 20 GHz, and a $PDIV_{peak}$ of 1137 V. A 30 μm coating on a stainless steel plaque had a cross-hatch rating (ASTM 3359B) of 5B, indicative of strong enamel adhesion.

### Example 1: mBAPS/TMAC-based PAI

Following the procedure in Reference Example 1, this resin was synthesized with 91.21 g mBAPS (0.211 mol), 44.63 g TMAC (0.212 mol), and a total of 317 g NMP. This material had an IV of 0.33 dL/g, an Mw of 24,700 g/mol, and a Tg of 249 °C. A 30 μm film prepared as described in Reference Example 1 had a $D_k$ of 3.3 and Df of 0.012 at 5 GHz, a $D_k$ of 3.2 and Df of 0.015 at 20 GHz, and a $PDIV_{peak}$ of 1223 V. A 30 μm coating on a stainless steel plaque had a cross-hatch rating (ASTM 3359B) of 5B, indicative of strong enamel adhesion.

### Example 2: pBAPP/TMAC-based PAI

Following the procedure in Reference Example 1, this resin was synthesized with 59.28 g BAPP (0.144 mol), 30.56 g TMAC (0.145 mol), and a total of 210 g NMP. This material had an IV of 0.49 dL/g, an Mw of 28,700 g/mol, and a Tg of 238 °C. A 30 μm film prepared as described in Reference Example 1 had a $D_k$ of 3.1 and $D_f$ of 0.011 at 5 GHz, a $D_k$ of 3.1 and $D_f$ of 0.014 at 20 GHz, and a $PDIV_{peak}$ of 1256 V. A 30 μm coating on a stainless steel plaque had a cross-hatch rating (ASTM 3359B) of 5B, indicative of strong enamel adhesion.

### Example 3: pHFBAPP/TMAC-based PAI

Following the procedure in Reference Example 1, this resin was synthesized with 65.61 g HFBAPP (0.127 mol), 26.78 g TMAC (0.127 mol), and a total of 216 g NMP. This material had an IV of 0.33 dL/g, an Mw of 20,900 g/mol, and a Tg of 242 °C. A 30 μm film prepared as described in Reference Example 1 had a $D_k$ of 2.8 and Df of 0.010 at 5 GHz, a $D_k$ of 3.1 and Df of 0.014 at 20 GHz, and a $PDIV_{peak}$ of 1351 V. A 30 μm coating on a stainless steel plaque had

a cross-hatch rating (ASTM 3359B) of 5B, indicative of strong enamel adhesion.

**Example 4: TFMB/TMAC-based PAI**

Following the procedure in Reference Example 1, this resin was synthesized with 82.47 g TFMB (0.258 mol), 54.50 g TMAC (0.259 mol), and a total of 319 g NMP. This material had an IV of 0.47 dL/g, an Mw of 23,100 g/mol, and a Tg of 248 °C. A 30 μm film prepared as described in Reference Example 1 had a $D_k$ of 2.7 and Df of 0.010 at 5 GHz, a $D_k$ of 2.5 and Df of 0.013 at 20 GHz, and a $PDIV_{peak}$ of 1249 V. A 30 μm coating on a stainless steel plaque had a cross-hatch rating (ASTM 3359B) of 5B, indicative of strong enamel adhesion.

**Example 5: Bisaniline M/TMAC-based PAI**

Following the procedure in Reference Example 1, this resin was synthesized with 65.86 g Bisaniline M (0.191 mol), 40.46 g TMAC (0.192 mol), and a total of 248 g NMP. This material had an IV of 0.24 dL/g, an Mw of 10,500 g/mol, and a Tg of 302 °C. A 30 μm film prepared as described in Reference Example 1 had a Dk of 2.9 and Df of 0.008 at 5 GHz, a $D_k$ of 2.7 and $D_f$ of 0.009 at 20 GHz, and a $PDIV_{peak}$ of 1213 V. A 30 μm coating on a stainless steel plaque had a cross-hatch rating (ASTM 3359B) of 5B, indicative of strong enamel adhesion.

**Example 6: Bisaniline P/TMAC-based PAI**

Following the procedure in Reference Example 1, this resin was synthesized with 84.42 g Bisaniline P (0.245 mol), 51.86 g TMAC (0.246 mol), and a total of 218 g NMP. This material had an IV of 0.25 dL/g, an $M_w$ of 16,400 g/mol, and a $T_g$ of 269 °C. A 30 μm film prepared as described in Reference Example 1 had a $D_k$ of 3.2 and Df of 0.014 at 5 GHz, and a $D_k$ of 3.1 and Df of 0.016 at 20 GHz. A 30 μm coating on a stainless steel plaque had a cross-hatch rating (ASTM 3359B) of 5B, indicative of strong enamel adhesion.

**Characterization methods**

Inherent viscosity (IV) measurements were performed on a Canon MiniPV-X at 25 °C with 0.5 % by mass polymer solutions in NMP against a pure NMP control made fresh daily. Results were calculated as an average of 3 runs within 0.05 % RSD by taking the ratio of the natural logarithm of the relative viscosity (solution viscosity/solvent viscosity) to the mass concentration of the polymer.

The weight-averaged molecular weight (Mw) was obtained by size exclusion chromatography on a Waters 515/2487 GPC array at room temperature with a 0.1 lithium bromide in DMF mobile phase stabilized with 0.1 wt. % phosphoric acid, and a Torlon 4000T standard.

The glass transition temperature (Tg) was determined by a DSC second heat with a ramp rate of 20 °C/min from RT to 315 °C and holding for 15 min for the first heat, 20 °C/min from 315 °C to 200 °C and holding for 1 min for the first cool, and 20 °C/min from 200 °C to 400 °C for the second heat.

The 'cross-hatch rating' was determined from cured 30 μm coatings on stainless steel plaques. In the cross-hatch test (ASTM 3359 B), two sets of six 1 mm-spaced parallel lines, one perpendicular to the other, are scored into the coating surface to form a lattice pattern. The lattice is then firmly brushed five times diagonally and the coating is assigned a rating based on how much material flakes off with 5B indicative of no peeling or removal all the way down to OB in which the entire lattice pattern and some of the surrounding coating is removed.

$PDIV_{peak}$ measurements were conducted with 30 μm film samples using 25 mm and 75 mm circular stainless steel electrodes. The voltage was ramped at 20 V/s and the partial discharge threshold was determined as the point at which 50 consecutive discharges of ≥0.100 nC occurred.

Dielectric measurements including the $D_k$ (dielectric constant, real component of permittivity) and $D_f$ (dielectric loss tangent, ratio of imaginary to real component of permittivity) were measured on a broadband dielectric spectrometer at 5 GHz and 20 GHz.

Table below summarizes the results of Examples 1-6 and Reference Example 1:

TABLE 1

| diamine | Example | Dielectric Constant Dk | | Dielectric Loss Df | | PDIV (peak) 30 µm film |
|---|---|---|---|---|---|---|
| | | 5 GHz | 20 GHz | 5 GHz | 20 GHz | |
| 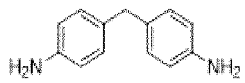 | MDA (Ref. Ex. 1) | **3.6** | **3.5** | **0.017** | **0.017** | **1137 V** |
| 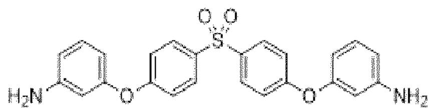 | *m*BAPS (Ex. 1) | 3.3 | 3.2 | 0.012 | 0.015 | 1256 V |
| 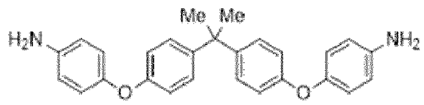 | *p*BAPP (Ex. 2) | 3.1 | 3.1 | 0.011 | 0.014 | 1249 V |
| 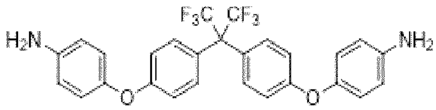 | *p*HFBAPP (Ex.3) | 2.8 | 3.1 | 0.010 | 0.014 | 1351 V |
| 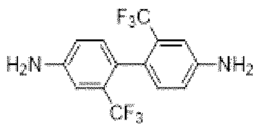 | TFMB (Ex. 4) | 2.7 | 2.5 | 0.010 | 0.013 | 1223 V |
| 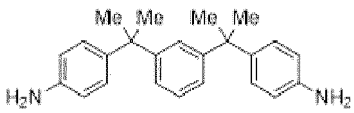 | Bisaniline M (Ex. 5) | 2.9 | 2.7 | 0.008 | 0.009 | 1213 V |
| 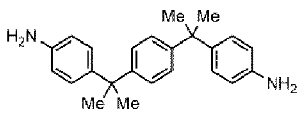 | Bisaniline P (Ex. 6) | 3.2 | 3.1 | 0.014 | 0.016 | n.d. |

Data summarized in Table 1 above well demonstrate that the polymers (PAI) of Ex. 1 to 6 all possess significantly better dielectric behavior than reference material, so that their performances in insulating layers of conductors is significantly enhanced over the performances of reference materials. At the same time, when used as insulating layers on conductors, data from examples above well demonstrate that the advantageous dielectric performances are achieved without impairing the adhesion behavior, which is another relevant requirement in this field of use.

## Claims

**1.** An insulated conductor comprising:

- a conductor; and
- at least one insulation layer in direct contact with the conductor, wherein the insulation layer comprises or is made of a composition (C) comprising at least one aromatic polyamideimide polymer [polymer (PAI)] comprising recurring units ($R_{PAI}$), said recurring units ($R_{PAI}$) comprising at least one aromatic ring, one amide group and at least one of an amic acid group and an imide group and being selected from the group consisting of units of any of formulae ($R_{PAI}$-A) and ($R_{PAI}$-B):

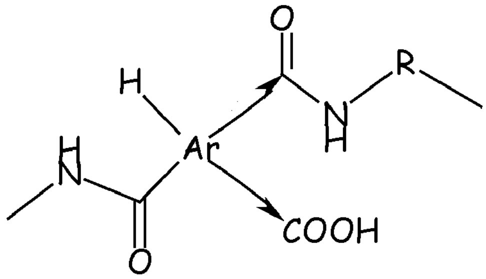

($R_{PAI}$-A)

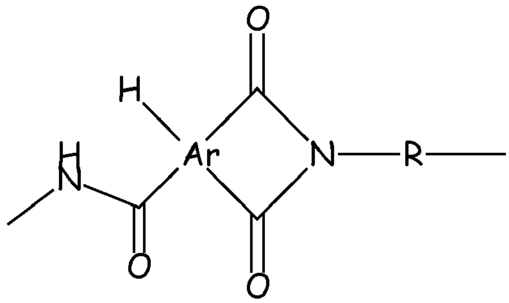

($R_{PAI}$-B)

wherein:

- the → denotes isomerism so that in any recurring unit $R_{PAI}$-A the groups to which the arrows point may exist as shown or in an interchanged position;
- Ar is a tetravalent aromatic group, and is typically selected from the group consisting of:

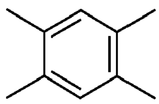,
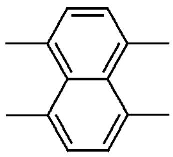,
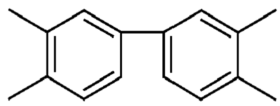,

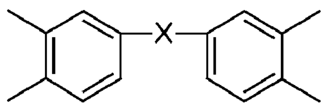

with X = -C(=O)-; -S-, -O-; $-SO_2-$; $-(CH_2)_n-$, $-(CF_2)_n-$, with n= 1,2,3,4 or 5; $-C(CF_3)_2-$, $-C(CH_3)_2-$;
- R is a divalent aromatic group selected from the group consisting of (R-A), (R-B) and (R-C):

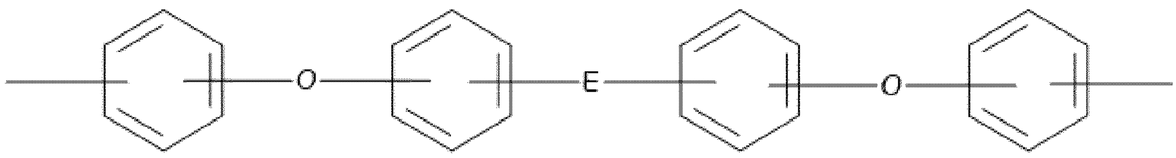

(R-A)

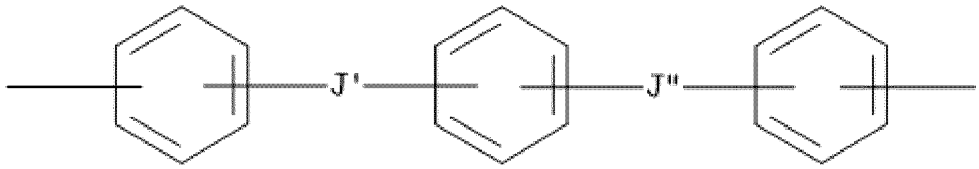

(R-B)

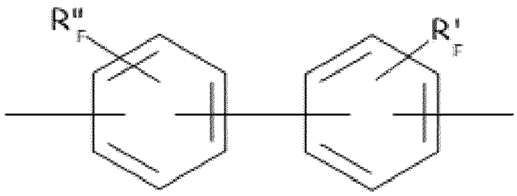

(R-C)

wherein:

- E is a divalent bridging group selected from the group consisting of - $SO_2$-; -$C(CF_3)_2$-, -$C(CH_3)_2$-;
- each of J' and J", equal to or different from each other, are divalent bridging groups independently selected from the group consisting of - $C(CF_3)_2$- and -$C(CH_3)_2$-;
- each of $R'_F$ and $R''_F$, equal to or different from each other, are monovalent (per)fluoroalkyl $C_1$-$C_6$ groups, preferably monovalent perfluoroalkyl $C_1$-$C_6$ groups, e.g. -$CF_3$.

**2.** The insulated conductor of Claim 1, wherein the composition (C) comprises at least one polymer (PAI) in an amount of at least 50 wt.%, preferably at least 60 wt.%, more preferably at least 70 wt.% and/or in an amount up to 100 wt.%, or in an amount of at most 99 wt.%, or at most 95 wt.%, or at most 80 wt.%, or even at most 75 wt.%, depending upon the presence of additional components in the composition (C).

**3.** The insulated conductor of Claim 1 or 2, wherein the polymer (PAI) comprises a major amount (exceeding 50 mol.%) of recurring units ($R_{PAI}$), with respect to the total amount of recurring units of polymer (PAI), or preferably polymer (PAI) comprises at least 60 mol. %, at least 80 mol. %, at least 90 mol. %, at least 95 mol. % or even at least 98 mol. % recurring units ($R_{PAI}$), as described above, with respect to the total amount of recurring units of polymer (PAI); or wherein the polymer (PAI) is a polymer essentially consisting of recurring units ($R_{PAI}$).

**4.** The insulated conductor of anyone of the preceding claims, wherein polymer (PAI) further comprises a minor amount of recurring units ($R°_{PAI}$) which are units comprising at least one aromatic ring, one amide group and at least one of an amic acid group and an imide group and which are different from recurring units ($R_{PAI}$), said recurring units ($R°_{PAI}$) being generally of any of formulae ($R°_{PAI}$-A) and ($R°_{PAI}$-B):

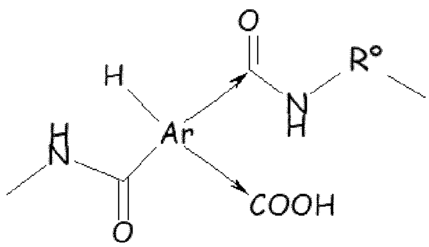

($R°_{PAI}$-A)

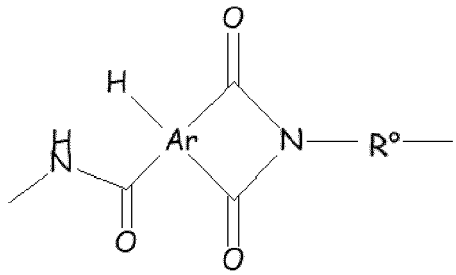

($R°_{PAI}$-B)

wherein:

- the → denotes isomerism so that in any recurring unit $R_{PAI}$-A the groups to which the arrows point may exist as shown or in an interchanged position;
- Ar has the same meaning as in formulae ($R_{PAI}$-A) and ($R_{PAI}$-B) as defined in Claim 1; an
- R° is a divalent aromatic group different from (R-A), (R-B) and (R-C), which is generally selected from the group consisting of (R°-D), (R°-E), (R° -F), (R° -G) :

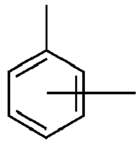

(R°-D)

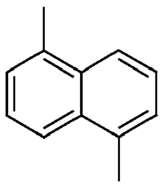

(R°-E)

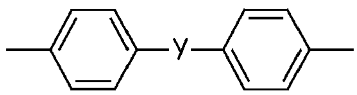

(R°-F),

with Y = -C(=O)-; -S-, -O-; $-SO_2-$; $-(CH_2)_n-$, - $(CF_2)_n-$, with n= 0, 1,2,3,4 or 5; $-C(CF_3)_2-$, $-C(CH_3)_2-$;

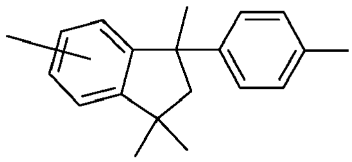

(R°-G);

and/or

wherein the polymer (PAI) further comprises a minor amount of recurring units ($R_{PI}$), which are units comprising at least one aromatic ring, and two groups selected from amic acid groups and an imide groups, and which are different from recurring units ($R_{PAI}$), wherein said recurring units ($R_{PI}$) are generally selected from the group consisting of units of formulae ($R_{PI}$-a), ($R_{PI}$-b) and ($R_{PI}$-c):

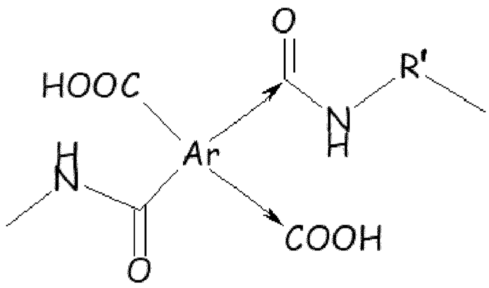

($R_{PI}$-a)

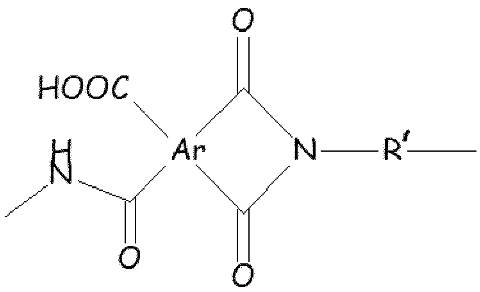

($R_{PI}$-b)

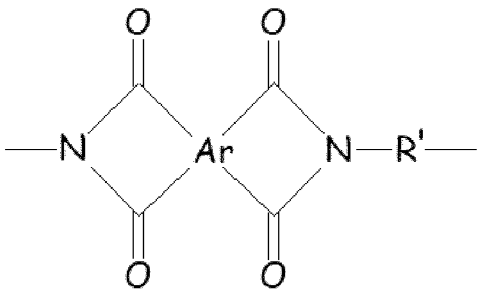

($R_{PI}$-c)

wherein:

- the → denotes isomerism so that in any recurring unit $R_{PAI}$-A the groups to which the arrows point may exist as shown or in an interchanged position;
- Ar has the same meaning as in formulae ($R_{PAI}$-A) and ($R_{PAI}$-B) in Claim 1;
- R' is a group R of any of formulae (R-A), (R-B) and (R-C), as defined in formulae ($R_{PAI}$-A) and ($R_{PAI}$-B) in Claim 1, or is a group R° of any of formulae (R°-D), (R°-E), (R°-F), (R°-G), as defined in formulae ($R°_{PAI}$-A) and ($R°_{PAI}$-B).

**5.** The insulated conductor according to anyone of Claims 1 to 4, wherein in recurring units ($R_{PAI}$) of polymer (PAI), group R is selected from the group consisting of:

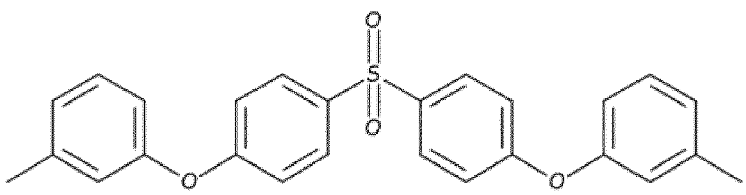

(R-A-1-*m*)

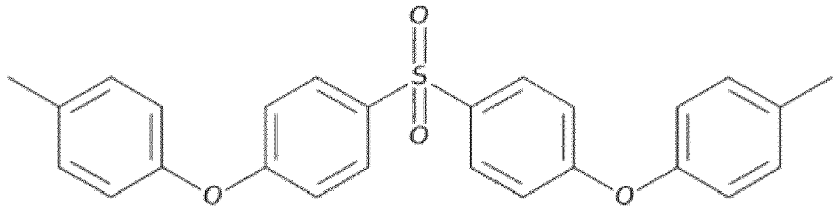

(R-A-1-*p*)

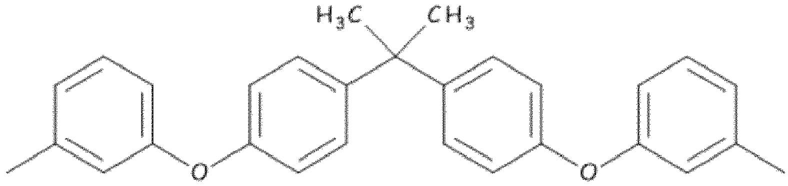

(R-A-2-*m*)

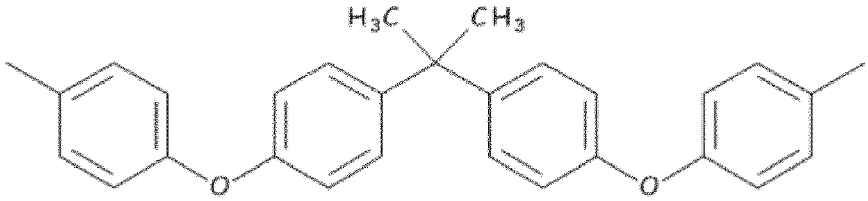

(R-A-2-*p*)

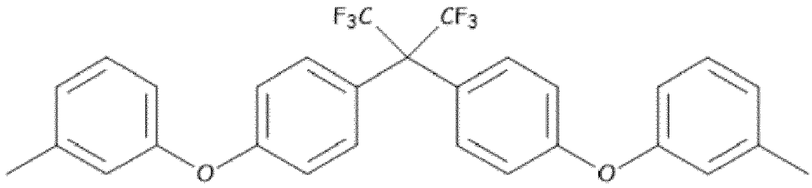

(R-A-3-*m*)

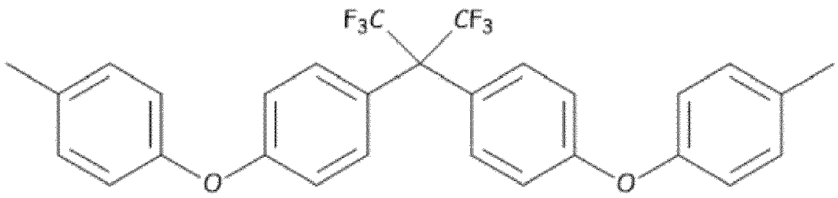

(R-A-3-*p*)

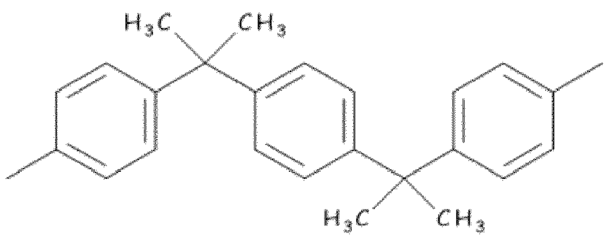

(R-B-1)

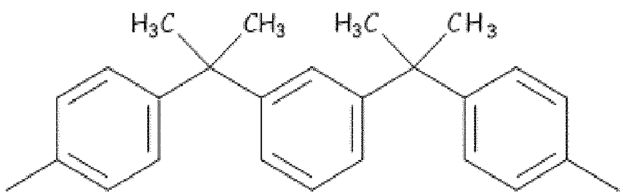

(R-B-2)

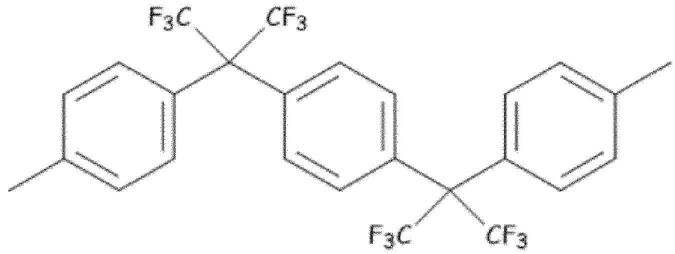

(R-B-3)

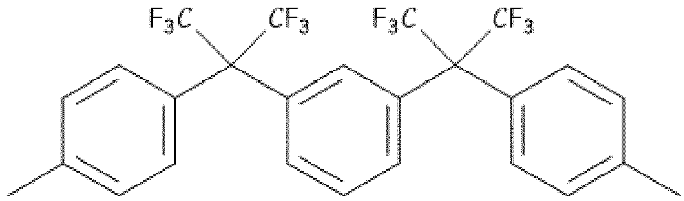

(R-B-4)

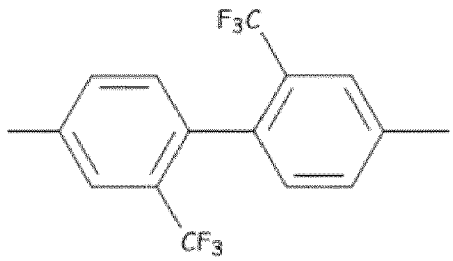

(R-C-1);

and wherein, preferably, in recurring units ($R_{PAI}$) of polymer (PAI), group R is selected from the group consisting of groups (R-A-1-m), (R-A-2-p), (R-A-3-p), (R-B1), (R-B-2) and (R-C-1).

**6.** The insulated conductor according to Claim 5, wherein the polymer (PAI) is selected from the group consisting of:

- polymers (PAI-*m*BAPS) comprising, or even preferably consisting essentially of the following recurring units:

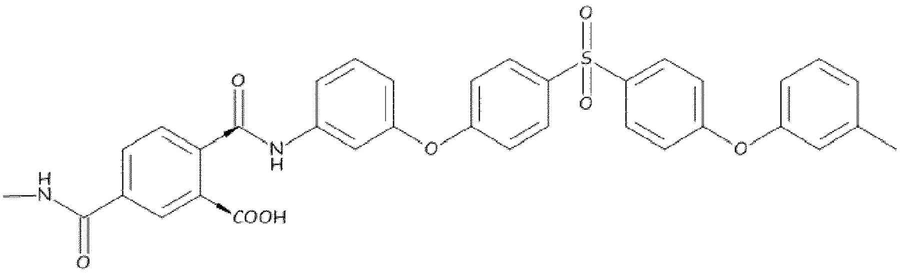

($R_{PAI\text{-}mBAPS}$-A)

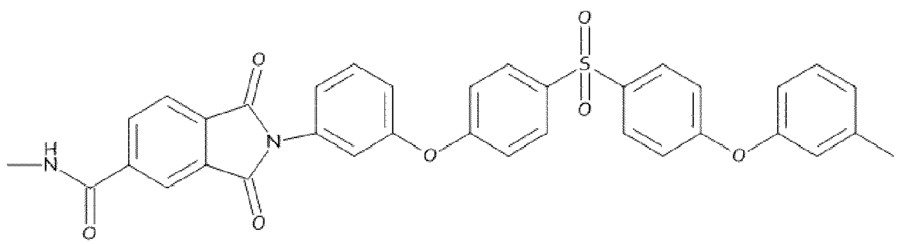

($R_{PAI\text{-}mBAPS}$-B)

- polymers (PAI-*p*BAPS) comprising, or even preferably consisting essentially of the following recurring units:

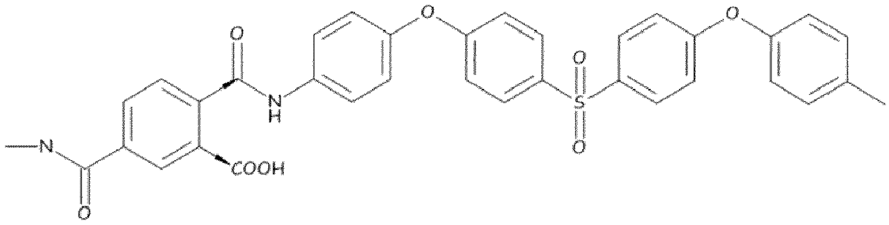

($R_{PAI\text{-}pBAPS}$-A)

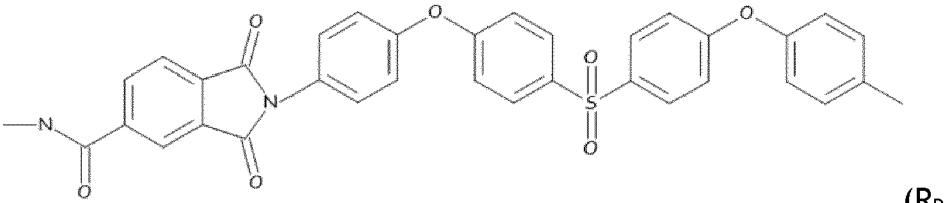

($R_{PAI\text{-}pBAPS}$-B)

- polymers (PAI-*m*BAPP) comprising, or even preferably consisting essentially of the following recurring units:

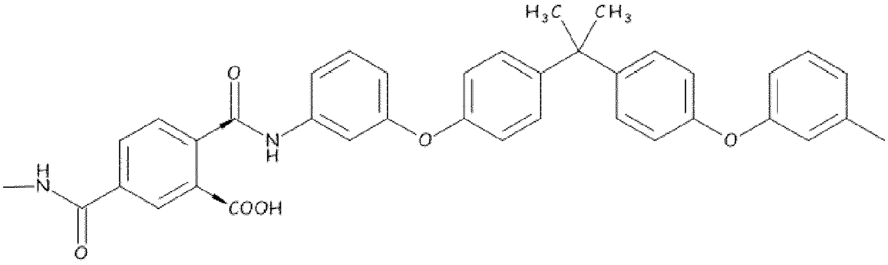

($R_{PAI\text{-}mBAPP}$-A)

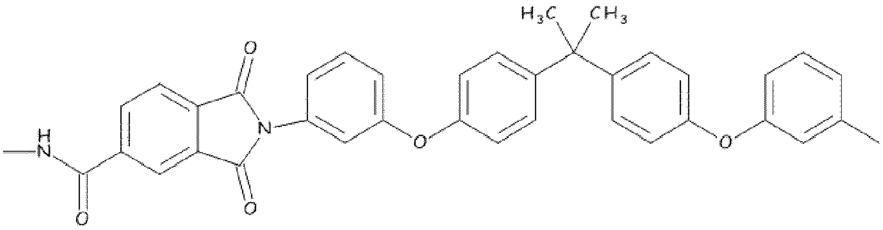

($R_{PAI\text{-}mBAPP}$-B)

- polymers (PAI-*p*BAPP) comprising, or even preferably consisting essentially of the following recurring units:

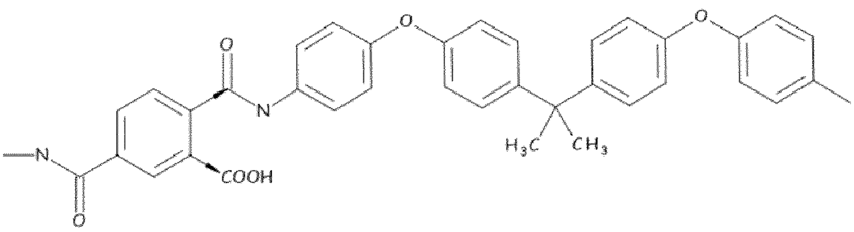

($R_{PAI\text{-}pBAPP}$-A)

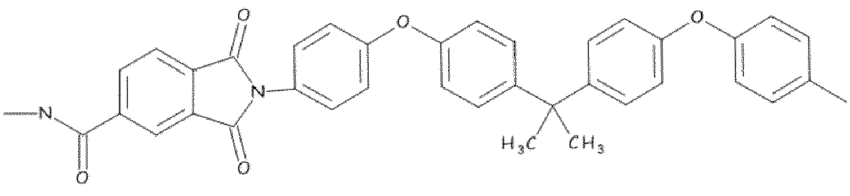

($R_{PAI\text{-}pBAPP}$-B)

- polymers (PAI-*m*HFBAPP) comprising, or even preferably consisting essentially of the following recurring units:

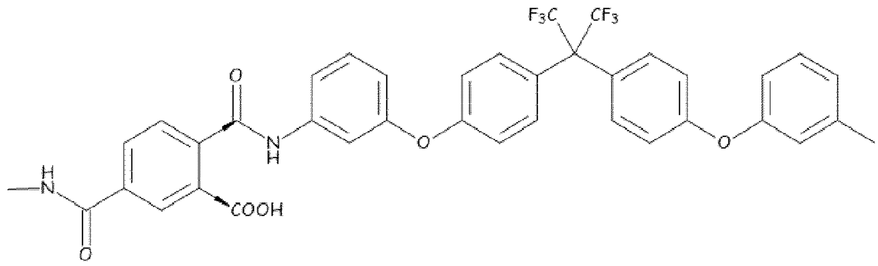

(R$_{PAI\text{-}mHFBAPP}$-A)

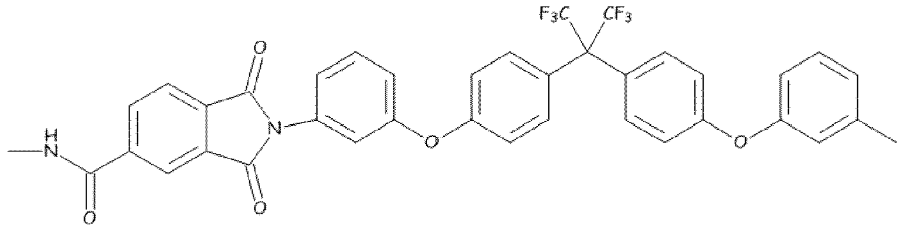

($_{PAI\text{-}mHFBAPP}$-B)

- polymers (PAI-*p*HFBAPP) comprising, or even preferably consisting essentially of the following recurring units:

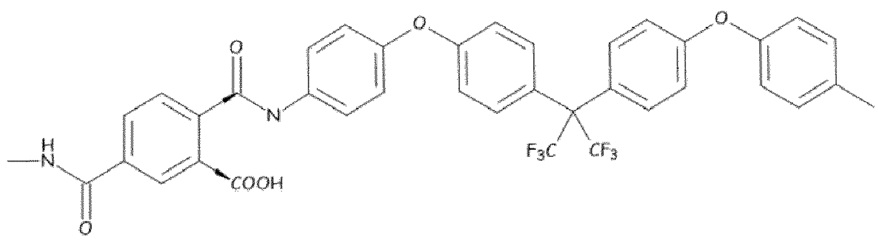

(R$_{PAI\text{-}pHFBAPP}$-A)

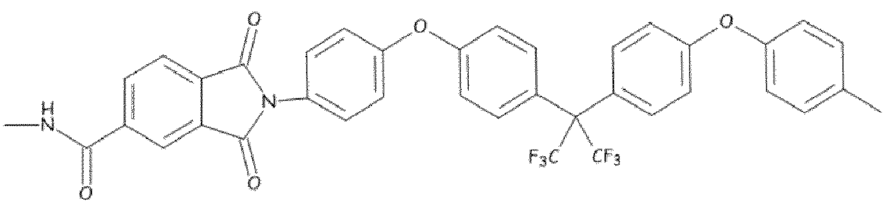

(R$_{PAI\text{-}pHFBAPP}$-B)

- polymers (PAI-bisaniline M) comprising, or even preferably consisting essentially of the following recurring units:

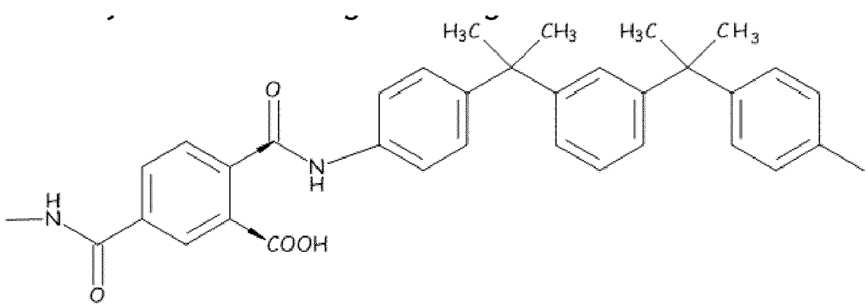

(R$_{PAI\text{-}BAM}$-A)

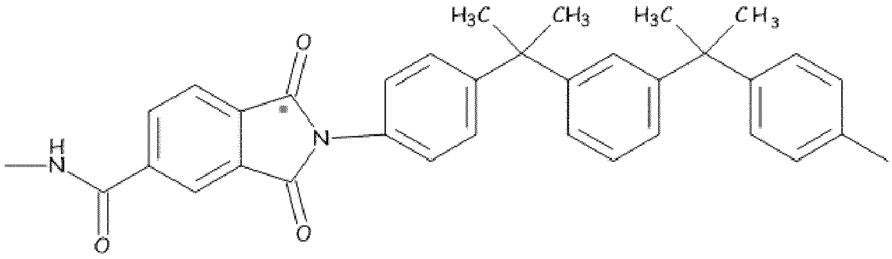

($R_{PAI-BAM}$-B)

- polymers (PAI-bisaniline P) comprising, or even preferably consisting essentially of the following recurring units:

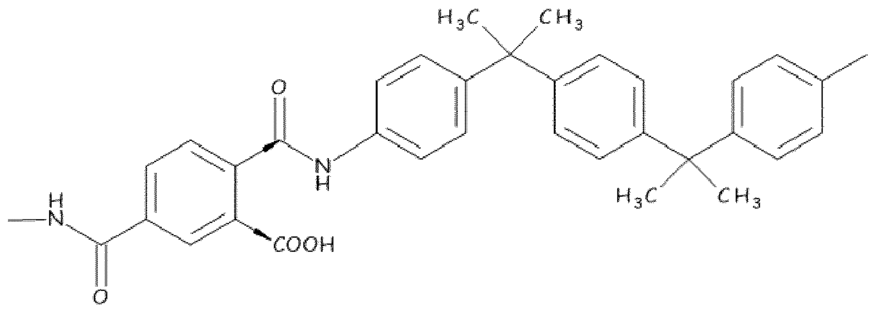

($R_{PAI-BAP}$-A)

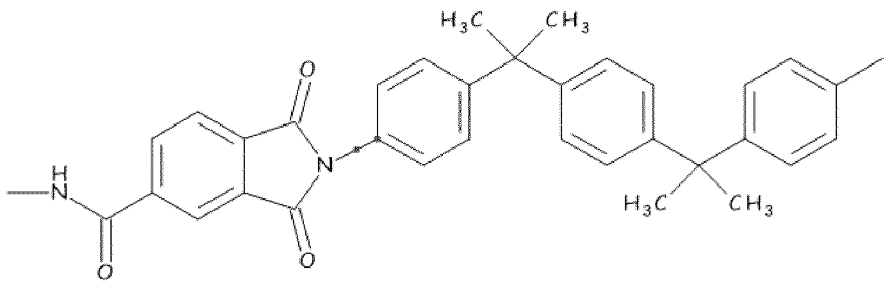

($R_{PAI-BAP}$-B);

- polymers (PAI-bis-HF-aniline M) comprising, or even preferably consisting essentially of the following recurring units:

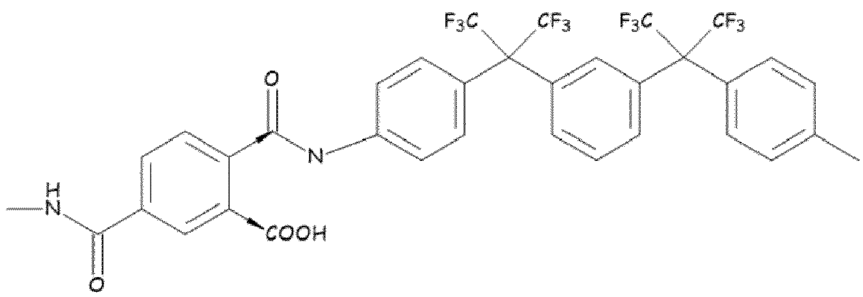

($R_{PAI-HFBAM}$-A)

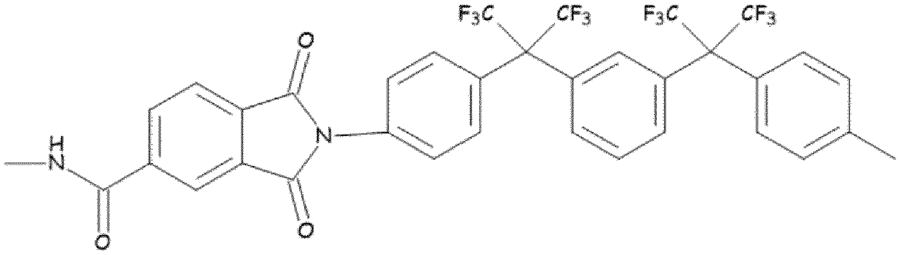

($R_{PAI-HFBAM}$-B)

- polymers (PAI-bis-HF-aniline P) comprising, or even preferably consisting essentially of the following recurring units:

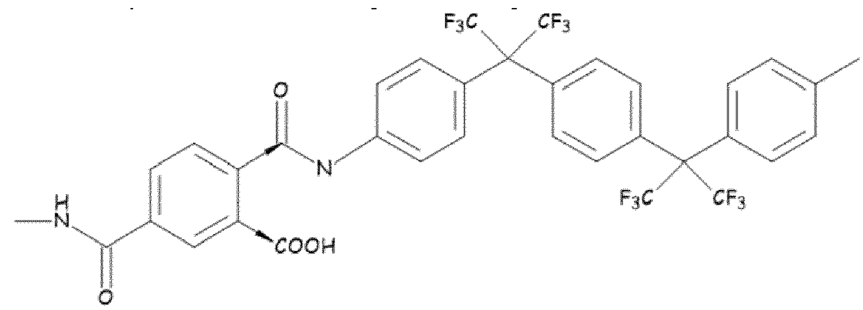

($R_{PAI\text{-}HFBAP}$-A)

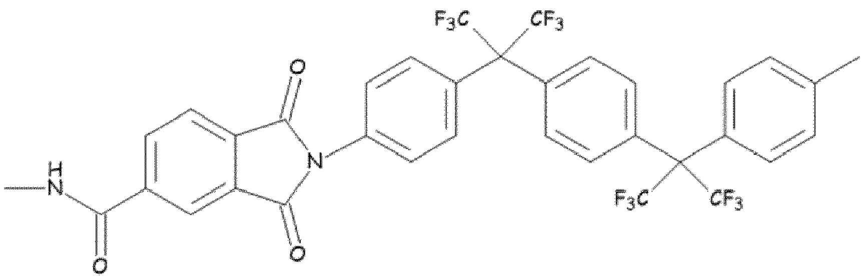

($R_{PAI\text{-}HFBAP}$-B);

- polymers (PAI-TFMB) comprising, or even preferably consisting essentially of the following recurring units:

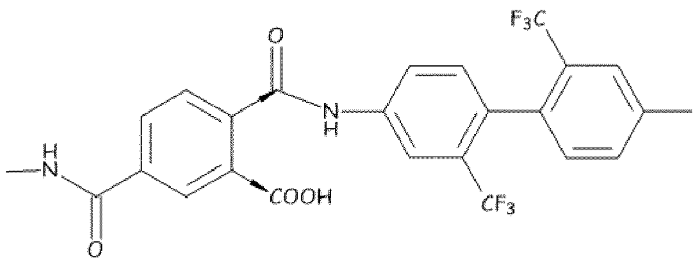

($R_{PAI\text{-}TFMB}$-A)

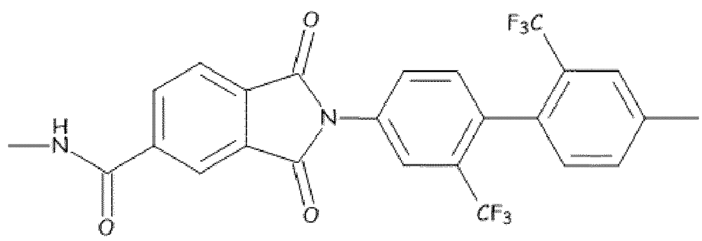

($R_{PAI\text{-}TFMB}$-B);

and wherein polymer (PAI) is preferably selected from the group consisting of polymers (PAI-*m*BAPS), polymers (PAI-*p*BAPP), polymers (PAI-*p*HFBAPP) polymers (PAI-bisaniline M), polymers (PAI-bisaniline P) and polymers (PAI-TFMB).

**7.** The insulated conductor according to anyone of the preceding claims, wherein the conductor is formed from any or copper, aluminium, annealed copper, oxygen-free copper, silver-plated copper, nickel plated copper, copper clad aluminum, silver, gold, a conductive alloy, a bimetal, carbon nanotubes, or any other suitable electrically conductive material, and wherein preferably the conductor is a copper-based conductor, and wherein more preferably the conductor consists essentially of copper.

**8.** The insulated conductor according to anyone of the preceding claims, wherein the conductor is a wire, and may have a circular or round cross-sectional shape or it may be formed with a square shape, a rectangular shape, an elliptical or oval shape, or any other suitable cross-sectional shape

**9.** The insulated conductor according to anyone of the preceding claims, wherein the conductor comprises one or more than one additional outer layers with the *proviso* that the insulation layer comprising or made of composition (C) is in direct contact with the surface of the conductor, and/or wherein the insulated conductor, in addition to the insulation layer comprising or made of composition (C) and, optionally, the additional outer layer, may include one or more sheathing made from wraps or tapes.

**10.** A method for making the insulated conductor of any one of claims 1 to 9, said method comprising a step of enamelling the insulation layer on the surface of the conductor.

**11.** The method of Claim 10, wherein in said step of enamelling, a liquid composition (LC) comprising composition (C) and a solvent is applied to the conductor, preferably by passing the conductor through and enamelling die equipped with a calibrated slot that pour the quantity of liquid composition (LC) on the conductor necessary to achieve the target thickness, so as to obtain a conductor charged with said liquid composition (LC), and wherein the conductor charged is then submitted to a thermal treatment.

**12.** The method of Claim 10 or 11, wherein one or more suitable surface modification treatments may be utilized on the conductor to promote adhesion with the insulation layer.

**13.** A coil comprising windings of the insulated wire of claim 8 or 9, wherein the coil may comprise an outer layer of an impregnation varnish, and wherein the insulating layer of the insulated wire may comprise a pre-treatment for increasing adhesion to the said impregnation varnish.

**14.** An electric machine comprising at least one insulated conductor according to any one of claims 1-9 or the coil of claim 13; preferably an electric machine comprising a stator and a rotor, said stator comprising a metallic core with slots stuffed with coils of the insulated wire according to Claims 8 or 9 or with coils of Claim 13.

**15.** An electric vehicle comprising an electric motor including the insulated wire according to Claims 8 or 9 or the coil of Claim 13.

**16.** Use of the insulated conductor of any one of claims 1 to 9 or of the coil of Claim 13 in an electric machine, in particular in an electric motor, preferably as a magnet wire in the stator of an asynchronous induction motor.

Europäisches Patentamt
European Patent Office
Office européen des brevets

# EUROPEAN SEARCH REPORT

Application Number
EP 22 19 5868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | US 2011/198109 A1 (NABESHIMA SHUTA [JP] ET AL) 18 August 2011 (2011-08-18)<br><br>* paragraph [0010] - paragraph [0011] *<br>* paragraph [0059] - paragraph [0061] *<br>* paragraph [0063] - paragraph [0069]; examples 1-6 *<br>* claims 1-11 *<br>----- | 1-3, 5-10, 13-16<br><br>4,11,12 | INV.<br>H01B3/30<br>C08L79/08<br>H01K3/30 |
| X | US 2013/032374 A1 (USHIWATA TAKAMI [JP] ET AL) 7 February 2013 (2013-02-07)<br>* abstract *<br>* paragraph [0012] - paragraph [0026] *<br>* paragraph [0030] - paragraph [0031] *<br>* paragraph [0053] *<br>* paragraph [0060] - paragraph [0067]; examples 2-5 *<br>----- | 1-16 | |
| X<br><br>Y | US 2013/228359 A1 (KIKUCHI HIDEYUKI [JP] ET AL) 5 September 2013 (2013-09-05)<br>* abstract *<br>* paragraph [0026] - paragraph [0027]; figure 1 *<br>* paragraph [0045] - paragraph [0048] *<br>* paragraph [0061] - paragraph [0067]; examples 8-14; table 3 *<br>* claims 1-12 *<br>----- | 1-10, 13-16<br>4,11,12 | TECHNICAL FIELDS SEARCHED (IPC)<br>H01B<br>H01J<br>C09J<br>C08L<br>H01K |
| Y | US 2019/341167 A1 (KNERR ALLAN R [US]) 7 November 2019 (2019-11-07)<br>* paragraph [0023] - paragraph [0025] *<br>----- | 11,12 | |

The present search report has been drawn up for all claims

| Place of search | Date of completion of the search | Examiner |
|---|---|---|
| Munich | 9 February 2023 | Meiser, Wibke |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 19 5868

This annex lists the patent family members relating to the patent documents cited in the above-mentioned European search report. The members are as contained in the European Patent Office EDP file on
The European Patent Office is in no way liable for these particulars which are merely given for the purpose of information.

09-02-2023

| Patent document cited in search report | Publication date | Patent family member(s) | Publication date |
|---|---|---|---|
| US 2011198109 A1 | 18-08-2011 | CN 102161863 A | 24-08-2011 |
| | | JP 5626530 B2 | 19-11-2014 |
| | | JP 2011190434 A | 29-09-2011 |
| | | US 2011198109 A1 | 18-08-2011 |
| US 2013032374 A1 | 07-02-2013 | CN 102911594 A | 06-02-2013 |
| | | JP 2013049843 A | 14-03-2013 |
| | | US 2013032374 A1 | 07-02-2013 |
| US 2013228359 A1 | 05-09-2013 | CN 101481582 A | 15-07-2009 |
| | | JP 4473916 B2 | 02-06-2010 |
| | | JP 2009161683 A | 23-07-2009 |
| | | US 2009176961 A1 | 09-07-2009 |
| | | US 2013228359 A1 | 05-09-2013 |
| US 2019341167 A1 | 07-11-2019 | CA 3099386 A1 | 14-11-2019 |
| | | CN 112424879 A | 26-02-2021 |
| | | EP 3791410 A1 | 17-03-2021 |
| | | JP 2021523270 A | 02-09-2021 |
| | | KR 20210018241 A | 17-02-2021 |
| | | US 2019341167 A1 | 07-11-2019 |
| | | WO 2019217254 A1 | 14-11-2019 |

EPO FORM P0459

For more details about this annex : see Official Journal of the European Patent Office, No. 12/82